# EUROPÄISCHE PATENTANMELDUNG

(11) **EP 2 446 742 A1**
(43) Veröffentlichungstag der Anmeldung: **02.05.2012**
(21) Anmeldenummer: 10189207.3
(22) Anmeldetag: 28.10.2010
(51) Int. Cl.: A01N 43/08, A01N 43/16, A01N 47/02, A01N 53/00, A01N 43/56, A01N 47/06, A01N 47/40, A01N 41/10, A01N 43/12, A01N 25/00, A01P 7/00

(54) **Insektizide oder akarizide Zusammensetzungen enthaltend Mono- oder Disacchariden als Wirkungsverstärker**

(71) Anmelder: Bayer CropScience AG, 40789 Monheim (DE)
(72) Erfinder: Die Erfindernennung liegt noch nicht vor

(57) **Zusammenfassung**

Die vorliegende Erfindung betrifft eine Zusammensetzung enthaltend mindestens ein Insektizid oder Akarizid und einen oder mehrere Wirkungsverstärker ausgewählt aus der Gruppe bestehend aus Mono- und Disacchariden, ein Verfahren zur Herstellung dieser Zusammensetzung sowie deren Verwendung zur Behandlung von Pflanzen und/oder deren Lebensraum.

## Beschreibung

Die vorliegende Erfindung betrifft Zusammensetzungen zur Schädlingsbekämpfung enthaltend insektizide oder akarizide Wirkstoffe sowie einen oder mehrere Wirkungsverstärker aus der Gruppe der Mono- und / oder Disaccharide und aus ihnen hergestellte Pflanzenschutzmittel. Die Erfindung betrifft auch deren Verwendung zur Bekämpfung tierischer Schädlinge beispielsweise auf Pflanzenoberflächen. Insbesondere betrifft die vorliegende Erfindung die Verwendung dieser Zusammensetzungen, um das Wirkspektrum einzelner Insektizide oder Akarizide zu verbreitern und gleichzeitig zusätzlich die Initialwirkung zu verbessern und damit die Pflanzen vor Schäden noch besser zu schützen.

Aus der Literatur ist bekannt, dass verschiedene Saccharide für Insekten attraktiv und frassstimulierend wirken (u.a. Bartlet et al. 1994, Entomologia Experimentalis et Applicata, 73, 77-83).

Saccharide sind Kohlenhydrate wie beispielsweise Zucker. Chemisch handelt es sich dabei um Oxidationsprodukte mehrwertiger Alkohole, also Polyhydroxyaldehyde (Aldosen) oder Poly hydroxyketone (Ketosen) sowie davon abgeleitete Verbindungen und deren Oligo- und Polykondensate. Am verbreitetsten sind Monosaccharide mit fünf oder sechs Kohlenstoffatomen, was einen Ringschluss ermöglicht. Einfachzucker können über glykosidische Bindungen durch eine Kondensationsreaktion zu Zwei- und Mehrfachzuckern verketten.

Die Monosaccharide (Einfachzucker, wie z.B. Traubenzucker (Glucose), Fruchtzucker (Fructose) oder Galactose), Disaccharide (Zweifachzucker, wie z.B. Kristallzucker (Saccharose), Milchzucker (Laktose), Malzzucker (Maltose), Trehalose), Trisaccharide (Dreifachzucker wie Raffinose) und Oligosaccharide (Mehrfachzucker) sind in der Regel wasserlöslich und als Zucker bezeichnet. Die Polysaccharide (Vielfachzucker wie z.B. Stärke, Cellulose, Chitin) sind dagegen oftmals schlecht oder gar nicht in Wasser löslich.

Zudem ist beispielsweise aus EP 0598156 A1 bekannt, dass Saccharose in Kombination mit dem Insektizid *Bacillus thuringiensis* und einer Aminosäure zur Bekämpfung einer Schädlingspopulation genutzt werden kann. In Bernklau et al. 2008, J. of Econ. Entomology, 101, 341 - 351, wird beschrieben, dass Maiswurzelextrakte (Mischung verschiedener Saccharide und Fettsäuren) eine attraktive beziehungsweise frassstimulierende Wirkung auf den Maiswurzelbohrer haben und daher die Aufwandmenge von Thiamethoxam zur Bekämpfung dieses Schädlings reduziert werden kann.

Aus DE-A-10 2006 011 403 ist bekannt, dass Ameisenköder, die Insektizide (hier bevorzugt auch Chloronicotinyle und Fiprole genannt) durch den Zusatz von Zuckersirup länger für die Schädlinge attraktiv bleiben. Die biologischen Beispiele zeigen hier die unterschiedliche Attraktivität der eingesetzten Invertzucker-, Korn- und Glucosesirupe.

US-B-6,939,830 offenbart Zusammensetzungen enthaltend Fipronil, ein Feuchthaltemittel und ein pflanzliches Mehl. Die Zusammensetzungen können zusätzlich einen Zucker enthalten, der als Sprengmittel eingesetzt wird. Bevorzugte Zucker sind Saccharose, Lactose, Fructose, Dextrose,. Glucose, Melasse und Honig. In den Beispielen werden Zusammensetzungen enthaltend Fipronil und Lactose getestet.

Desweiteren ist bereits bekannt, dass bestimmte cyclische Ketoenole herbizide und/oder insektizide und/oder akarizide und/oder nematizide Eigenschaften besitzen. Beispielhaft zu nennen ist Spirotetramat bekannt aus WO 98/05638 sowie dessen cis-Isomer aus WO 04/007448, desweiteren Spirodiclofen und Spiromesifen bekannt aus EP-A-0528156.

Weiterhin ist aus EP-A-0 539 588 und WO 2007/115644 bekannt, 4-Aminobut-2-enolid-Verbindungen als Pflanzenschutzmittel zur Bekämpfung von Insekten und Akariden zu verwenden. Die erfindungsgemäßen Aminobut-2-enolid 4-{[(6-Chlorpyrid-3-yl)methyl](2,2-difluorethyl)amino}furan-2(5H)-on (Verbindung (I-1)), deren insektizide Wirkung erstmals in WO 2007/115644 beschrieben ist; 4-{[(6-Chlorpyrid-3-yl)methyl](cyclopropyl)amino}furan-2(5H)-on (Verbindung (I-2)) und 4-{[(6-Chlorpyrid-3-yl)methyl](methyl)amino}furan-2(5H)-on (Verbindung (1-3)) deren insektizide Wirkung erstmals in EP-A-0 539 588 beschrieben ist. Die Verbindungen lassen sich nach den in WO2007/115644 und EP-A-0539588 beschriebenen Verfahren herstellen und sie besitzen die folgenden Strukturen:

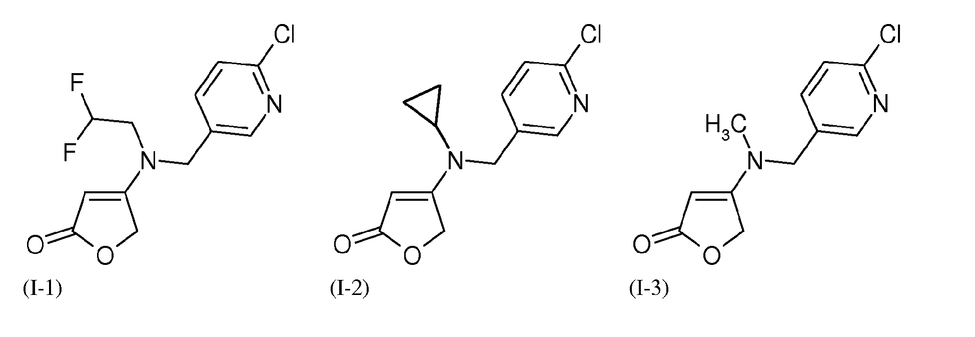

Weiterhin ist aus WO 2007/095229 A2 und WO-A-2007/149134 bekannt, dass Sulfoxaflor insektizide Wirkung aufweist.

Weiterhin sind die Wirkstoffe Flubendiamid und Rynaxypyr (Chlorantraniliprole) aus "The Pesticide Manual", Tomlin C.D.S. (Ed.), Vol. 15, BCPC, pages 175- 176 und pages 514 - 515 bekannt. Der Wirkstoff Cyantraniliprole (Cyazypyr) ist bekannt aus WO 04/067528.

Weiterhin bekannt sind Pyrethroide, beispielsweise Acrinathrin aus EP-A-048 186, Alpha-cypermethrin bekannt aus EP-A-067 461, Betacyfluthrin bekannt aus EP-A-206 149, Cypermethrin bekannt aus DE-A-2 326 077, Deltamethrin bekannt aus DE-A-2 326 077, Lambda-cyhalothrin bekannt aus EP-A-106 469, Gamma-Cyhalothrin bekannt aus GB-A-02143823, Taufluvalinat bekannt aus EP-A-038 617, Cyfluthrin bekannt aus DE-A-27 09 264, Bifenthrin bekannt aus EP-A-049 977, Transfluthrin bekannt aus EP279325, die ebenfalls gute insektizide und/oder akarizide Eigenschaften besitzen.

Desweiteren ist bekannt, dass Fiprole gute insektizide und akarizide Wirkung aufweisen. Beispielhaft ist Ethiprole aus WO97/022593 sowie Fipronil aus EP-A 0 295 117 zu nennen.

Bekannt ist auch, dass natürliche Pflanzeninhaltsstoffe tierische Schädlinge abtöten können. Beispielhaft sei hier Azadirachtin, ein Inhaltsstoff aus dem Samen des Neembaumes (Sundaram 1996) genannt.

Die Wirksamkeit der einzelnen Verbindungen ist gut, entspricht aber bei niedrigen Aufwandmengen oder gegen einzelne Schädlinge in manchen Fällen nicht den hohen Anforderungen, die an Insektizide, Nematizide oder Akarizide gestellt werden.

Da sich zudem aber die ökologischen und ökonomischen Anforderungen an moderne Pflanzenbehandlungsmittel laufend erhöhen, beispielsweise was Selektivität und Aufwandmenge angeht, und außerdem z.B. Probleme mit Resistenzen auftreten können, besteht die ständige Aufgabe, neue Pflanzenbehandlungsmittel zu entwickeln, die zumindest in Teilbereichen Vorteile gegenüber den Bekannten aufweisen.

Es wurde nun überraschend gefunden, dass die Kombination von Wirkungsverstärkern aus der Gruppe der Mono- und / oder Disaccharide mit bestimmten insektiziden oder akariziden Wirkstoffen bzw. Wirkstoffgruppen das Spektrum der zu bekämpfenden Schädlinge vergrößert und auch die Wirkung gegen die Schädlinge schneller eintritt. Dies ist im Gegensatz zu den in der Literatur beschriebenen Effekten jedoch nicht bzw. nicht nur auf Frassstimulation zurückzuführen, da beispielsweise bei beißend-kauenden Schädlingen kein vermehrter Frass durch Zugabe des Wirkungsverstärkers festgestellt werden konnte. Die Schädlinge nehmen sowohl auf dem nur mit Insektizid oder Akarizid behandelten Blattmaterial, als auch auf dem mit der erfindungsgemäßen Zusammensetzung behandelten Blattmaterial vergleichbare Mengen an Nahrung auf. Würde die zugegebene Menge Saccharid frassstimulierend wirken, hätte ein verstärkter Frass festgestellt werden müssen.

Aufgabe der vorliegenden Erfindung ist deshalb die Bereitstellung einer Zusammensetzung enthaltend insektizide und/oder akarizide Wirkstoffe, die ein vergrößertes Wirkungsspektrum hinsichtlich der zu bekämpfenden Schädlinge aufweisen und / oder bei denen die Initialwirkung gegenüber den Schädlingen schneller eintritt.

Die Erfindung betrifft eine Zusammensetzung enthaltend
a) einen oder mehrere Wirkstoffe ausgewählt aus der Gruppe bestehend aus Enaminocarbonylverbindungen (bevorzugt 4-{[6-Chlorpyrid-3-yl)methyl](2,2-difluoroethyl)amino} furan-2(5H)-on,), Benzenedicarboxamiden (BDCA's) (bevorzugt Flubendiamid), Anthranilsäureamiden (bevorzugt Chloranthraniliprole und Cyanthraniliprole), cyclische Ketoenole (bevorzugt Spirotetramat, Spirodiclofen und Spiromesifen), Sulfoximinen (bevorzugt Sulfoxaflor), Pyrethroide (bevorzugt Acrinathrin, Alpha-Cypermethrin, Beta-Cyfluthrin, Cyfluthrin, Cypermethrin, Deltamethrin, Bifenthrin, Lambda-Cyhalothrin, Gamma-Cyhalothrin, Taufluvalinate, Transfluthrin, Pyrethrum), biologische Insektizide (bevorzugt Azadirachtin) und
b) einen oder mehrere Wirkungsverstärker ausgewählt aus der Gruppe bestehend aus Mono- und Disacchariden und
c) gegebenenfalls ein oder mehrere Additive.

Besonders bevorzugt enthalten die bevorzugten Zusammensetzungen einen oder mehrere Wirkstoffe ausgewählt aus der Gruppe bestehend aus Enaminocarbonylverbindungen (bevorzugt 4-{[6-Chlorpyrid-3-yl)methyl](2,2-difluoroethyl)amino} furan-2(5H)-on), Cyanthraniliprole, Sulfoximinen (bevorzugt Sulfoxaflor) und Azadirachtin.

Die Erfindung betrifft auch die Verwendung solcher Zusammensetzungen zur Bekämpfung tierischer Schädlinge wobei die Verwendung der Zusammensetzungen auf Pflanzenoberflächen bevorzugt ist. Die Erfindung betrifft auch Pflanzenschutzmittel enthaltend die erfindungsgemäße Zusammensetzung.

Die Erfindung betrifft auch die Verwendung einer Zusammensetzung enthaltend
a) einen oder mehrere Wirkstoffe ausgewählt aus der Gruppe bestehend aus Enaminocarbonylverbindungen (bevorzugt 4-{[6-Chlorpyrid-3-yl)methyl](2,2-difluoroethyl)amino} furan-2(5H)-on,), Benzenedicarboxamiden (BDCA's) (bevorzugt Flubendiamid), Anthranilsäureamiden (bevorzugt Chloranthraniliprole und Cyanthraniliprole), cyclische Ketoenole (bevorzugt Spirotetramat, Spirodiclofen und Spiromesifen), Sulfoximinen (bevorzugt Sulfoxaflor), Fiprolen (bevorzugt Fipronil und Ethiprole), und Pyrethroiden (bevorzugt Acrinathrin, Alpha-Cypermethrin, Beta-Cyfluthrin, Cyfluthrin, Cypermethrin, Deltamethrin, Bifenthrin, Lambda-Cyhalothrin, Gamma-Cyhalothrin, Taufluvalinate, Transfluthrin, Pyrethrum), biologische Insektizide (bevorzugt Azadirachtin), Neonikotinoiden wie Imidacloprid, Thiacloprid, Clothianidin, Acetamiprid, Dinotefuran oder Thiamethoxam oder Carbamaten wie Methiocarb oder Thiodicarb oder Frasshemmstoffen wie Flonicamid und Pymetrozine oder Wachstumsregulatoren wie Pyriproxifen, Buprofezin oder Methoxyfenozide sowie biologischen, botanischen und anorganischen Insektiziden wie z. B. Spinosad und Spinetoram oder Macroliden wie Abamectin und Emamectin-benzoate,
b) einen oder mehrere Wirkungsverstärker ausgewählt aus der Gruppe bestehend aus Mono- und Disacchariden und
c) gegebenenfalls ein oder mehrere Additive,

zur Verbreiterung des Wirkungsspektrums der Wirkstoffe und / oder zur Verbesserung der Initialwirkung der Wirkstoffe in der Bekämpfung von Schadinsekten oder Akariden in der Landwirtschaft und im Materialschutz.

Die Wirkungsverstärker können der Anwendungslösung, die die erfindungsgemäßen Wirkstoffe enthält, zugesetzt werden (Tankmix Anwendung) oder in die Formulierung, die die erfindungsgemäßen Wirkstoffe umfasst (formuliertes Produkt), eingebaut werden.

Gegenstand der Erfindung sind somit auch formulierte insektizide Zusammensetzungen sowie anwendungsfertige Pflanzenschutzmittel (Spritzbrühen). Gegenstand der Erfindung ist schließlich auch die Verwendung der erfindungsgemäßen Zusammensetzung und Mittel zur Bekämpfung von Schadinsekten und/oder Akariden, die in der Landwirtschaft vorkommen, wobei therapeutische Verfahren am menschlichen oder tierischen Körper ausgenommen sind. Bevorzugt werden die erfindungsgemäßen Zusammensetzungen dabei für die Behandlung der Pflanzenoberflächen und insbesondere der Blätter eingesetzt.

Die erfindungsgemäßen Wirkstoffe (ai) können in den erfindungsgemäßen Zusammensetzungen und in den erfindungsgemäßen Verwendungen in einem breiten Konzentrationsbereich von 0,01 - 95 Gew.-% eingesetzt werden. Die Konzentration der Wirkstoffe in den aus den Zusammensetzungen bereiteten Anwendungslösungen beträgt dabei üblicherweise 1 - 1000 g ai/ha, bevorzugt 1 - 500 g ai/ha, ganz bevorzugt 5 - 250 g ai/ha.

Die Mono- und / oder Disaccharide können in den erfindungsgemäßen Zusammensetzungen und in den erfindungsgemäßen Verwendungen in einem breiten Konzentrationsbereich von in der Summe 0,001 - 95 Gew.-% eingesetzt werden. Die Konzentration der Mono- und / oder Disaccharide in der Summe in den aus den Zusammensetzungen bereiteten Anwendungslösungen beträgt dabei üblicherweise 0,001 - 5 Gew.-%, bevorzugt 0,005 - 1 Gew.-%, ganz bevorzugt 0,01 - 0,5 Gew.-%.

Die erfindungsgemäß eingesetzten Mono- und / oder Disaccharide werden in der Zusammensetzung in einer solchen Konzentration zugegeben, dass sie im anwendungsfertigen Pflanzenschutzmittel (in der Spritzbrühe oder bei Tankmix Anwendung) in einer Konzentration von 0,5 bis 80 mmol/l, bevorzugt 0,75 bis 37,5 mmol/l, besonders bevorzugt 1,5 bis 25 mmol/l vorliegen.

Im Fall eines formulierten Produktes wird die Konzentration der Mono- und / oder Disaccharide in der Formulierung so gewählt, dass sie nach Verdünnung der Formulierung auf die gewünschte Wirkstoffkonzentration in vorgenannten Bereichen liegt. Die Konzentration der Mono- und / oder Disaccharide in der Summe in der Formulierung beträgt dabei üblicherweise 0,1 - 50 Gew.-%.

In einer bevorzugten Ausführungsform enthält die erfindungsgemäße Zusammensetzung als Wirkungsverstärker ein erfindungsgemäßes Saccharid aus der Gruppe der Mono- und Disaccharide. Besonders bevorzugt sind Saccharide aus der Gruppe der Monosaccharide. Ganz besonders bevorzugt aus der Gruppe der Monosaccharide sind Fructose, Glucose und Galactose. Besonders bevorzugt aus der Gruppe der Disaccharide ist Lactose. Das gleiche gilt analog für die erfindungsgemäßen Verwendungen. Es wurde gefunden, dass durch die erfindungsgemäße Kombination von Wirkungsverstärker und Wirkstoff die Wirkung des erfindungsgemäßen Wirkstoffes so stark erhöht ist, dass er selbst bei solch niedrigen Konzentrationen noch wirksam ist, bei denen ohne Zusatz des Wirkverstärkers fast keine Wirkung mehr festzustellen ist. Die Reduktion der Feldaufwandmengen führt zur Schonung der Umwelt sowie reduzierten Rückständen auf Ernteprodukten.

Das Verhältnis der eingesetzten Wirkstoffe zueinander sowie die anzuwendende Gesamtmenge der Mischung der Wirkstoffe sind von der Art und dem Vorkommen der Insekten abhängig. Die optimalen Verhältnisse und Gesamteinsatzmengen können bei jeder Anwendung jeweils durch Testreihen ermittelt werden.

Es wurde weiterhin überraschend gefunden, dass die erfindungsgemäßen Zusammensetzungen sich in der Anwendung als vorteilhaft erwiesen haben. So kommt es seltener als bei vorbekannten Formulierungen zum Verstopfen von Düsen in den zum Versprühen benutzten Geräten. Aufgrund der Wasserlöslichkeit der erfindungsgemäß verwendeten Formulierungen sind die zur Aufbringung genutzten Geräte selbst nach dem Eintrocknen von Produktresten besonders leicht zu reinigen.

Die erfindungsgemäßen Zusammensetzungen enthalten:
- mindestens ein Insektizid bzw. Akarizid ausgewählt aus Enaminocarbonylverbindungen, Benzenedicarboxamiden (BDCA's), Anthranilsäureamiden, cyclische Ketoenolen, Sulfoximinen und Pyrethroiden, natürlich vorkommende Insektizide

Die erfindungsgemäßen Zusammensetzungen enthalten bevorzugt:
- mindestens ein Insektizid bzw. Akarizid ausgewählt aus 4-{[6-Chlorpyrid-3-yl)methyl](2,2-difluoroethyl)arnino} furan-2(5H)-on, Flubendiamide, Chloranthraniliprole, Cyantraniliprole, Spirotetramat, Spirodiclofen und Spiromesifen, Sulfoxaflor, Acrinathrin, Alpha-Cypermethrin, Beta-Cyfluthrin, Cyfluthrin, Cypermethrin, Deltamethrin, Bifenthrin, Lambda-Cyhalothrin, Gamma-Cyhalothrin, Taufluvalinate, Transfluthrin, Pyrethrum, Azadirachtin

Besonders bevorzugt sind Zusammensetzungen enthaltend
a) mindestens ein Insektizid bzw. Akarizid ausgewählt aus 4-{[6-Chlorpyrid-3-yl)methyl](2,2-difluoroethyl)amino} furan-2(5H)-on, Flubendiamide, Chloranthraniliprole, Cyantraniliprole, Spirotetramat, Spirodiclofen und Spiromesifen, Sulfoxaflor, Acrinathrin, Alpha-Cypermethrin, Beta-Cyfluthrin, Cyfluthrin, Cypermethrin, Deltamethrin, Bifenthrin, Lambda-Cyhalothrin, Gamma-Cyhalothrin, Taufluvalinate, Transfluthrin, Pyrethrum, Azadirachtin und
b) Fructose und
c) gegebenenfalls einen oder mehrere Additive.

Ebenfalls besonders bevorzugt sind Zusammensetzungen enthaltend
a) mindestens ein Insektizid bzw. Akarizid ausgewählt aus 4-{[6-Chlorpyrid-3-yl)methyl](2,2-difluoroethyl)amino} furan-2(5H)-on, Flubendiamide, Chloranthraniliprole, Cyantraniliprole, Spirotetramat, Spirodiclofen und Spiromesifen, Sulfoxaflor, Acrinathrin, Alpha-Cypermethrin, Beta-Cyfluthrin, Cyfluthrin, Cypermethrin, Deltamethrin, Bifenthrin, Lambda-Cyhalothrin, Gamma-Cyhalothrin, Taufluvalinate, Transfluthrin, Pyrethrum, Azadirachtin und
b) Glucose und
c) gegebenenfalls ein oder mehrere Additive.

Ebenfalls besonders bevorzugt sind Zusammensetzungen enthaltend
a) mindestens ein Insektizid bzw. Akarizid ausgewählt aus 4-{[6-Chlorpyrid-3-yl)methyl](2,2-difluoroethyl)amino} furan-2(5H)-on, Flubendiamide, Chloranthraniliprole, Cyantraniliprole, Spirotetramat, Spirodiclofen und Spiromesifen, Sulfoxaflor, Acrinathrin, Alpha-Cypermethrin, Beta-Cyfluthrin, Cyfluthrin, Cypermethrin, Deltamethrin, Bifenthrin, Lambda-Cyhalothrin, Gamma-Cyhalothrin, Taufluvalinate, Transfluthrin, Pyrethrum, Azadirachtin und
b) Galactose und
c) gegebenenfalls ein oder mehrere Additive.

Ebenfalls besonders bevorzugt sind Zusammensetzungen enthaltend
a) mindestens ein Insektizid bzw. Akarizid ausgewählt aus 4-{[6-Chlorpyrid-3-yl)methyl](2,2-difluoroethyl)amino} furan-2(5H)-on, Flubendiamide, Chloranthraniliprole, Cyantraniliprole, Spirotetramat, Spirodiclofen und Spiromesifen, Sulfoxaflor, Acrinathrin, Alpha-Cypermethrin, Beta-Cyfluthrin, Cyfluthrin, Cypermethrin, Deltamethrin, Bifenthrin, Lambda-Cyhalothrin, Gamma-Cyhalothrin, Taufluvalinate, Transfluthrin, Pyrethrum, Azadirachtin und
b) Lactose und
c) gegebenenfalls ein oder mehrere Additive.

In den erfindungsgemäßen Verwendungen zur Verbreiterung des Wirkungsspektrums der Wirkstoffe und / oder zur Verbesserung der Initialwirkung der Wirkstoffe werden bevorzugt die folgenden Wirkstoffe bzw. Wirkstoffgruppen eingesetzt:
Mindestens ein Insektizid bzw. Akarizid ausgewählt aus Enaminocarbonylverbindungen, Sulfoximinen, Ryanodinrezeptorhemmstoffen, cyclische Ketoenolen. Fiprolen und Pyrethroiden. Bevorzugt sind dabei 4-{[6-Chlorpyrid-3-yl)methyl](2,2-difluoroethyl)amino} furan-2(5H)-on, Flubendiamide, Chloranthraniliprole, Cyantraniliprole, Spirotetramat, Spirodiclofen und Spiromesifen, Sulfoxaflor, Ethiprole, Fipronil, Acrinathrin, Alpha-Cypermethrin, Beta-Cyfluthrin, Cyfluthrin, Cypermethrin, Deltamethrin, Bifenthrin, Lambda-Cyhalothrin, Gamma-Cyhalothrin, Taufluvalinate, Transfluthrin, Pyrethrum, Azadirachtin.

Als weitere bevorzugte Wirkstoffe bzw. Wirkstoffgruppen seien hier beispielhaft insbesondere die Neonikotinoiden wie Imidacloprid, Thiacloprid, Clothianidin, Acetamiprid, Dinotefuran oder Thiamethoxam oder Carbamaten wie Methiocarb oder Thiodicarb oder Frasshemmstoffe wie Flonicamid und Pymetrozine oder Wachstumsregulatoren wie Pyriproxifen, Buprofezin oder Methoxyfenozide sowie biologischen, botanischen und anorganischen Insektiziden wie z. B. Spinosad und Spinetoram oder Macrolide wie Abamectin und Emamectin-benzoate genannt.

Neben den oben aufgeführten Insektiziden bzw. Akariziden können erfindungsgemäß verwendete Zusammensetzungen weitere insektizide oder akarizide Wirkstoffe enthalten, z.B. ausgewählt aus:
(1) Acetylcholinesterase (AChE) Inhibitoren, wie beispielsweise
   Carbamate, z.B. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb; oder
   Organophosphate, z.B. Acephate, Azamethiphos, Azinphos (-methyl, -ethyl), Cadusafos, Chlorethoxyfos, Chlorfenvinphos, Chlormephos, Chlorpyrifos (-methyl), Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Isofenphos, Isopropyl *O-*(methoxyaminothio-phosphoryl) salicylat, Isoxathion, Malathion, Mecarbam, Methamidophos, Methidathion, Mevinphos, Monocrotophos, Naled, Omethoate, Oxydemeton-methyl, Parathion (-methyl), Phenthoate, Phorate, Phosalone, Phosmet, Phosphamidon, Phoxim, Pirimiphos (-methyl), Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.
(2) GABA-gesteuerte Chlorid-Kanal-Antagonisten, wie beispielsweise
   Organochlorine, z.B. Chlordane und Endosulfan (alpha-); oder
   Fiprole (Phenylpyrazole), z.B. Ethiprole, Fipronil, Pyrafluprole und Pyriprole.
(3) Natrium-Kanal-Modulatoren / spannungsabhängige Natrium-Kanal-Blocker, wie beispielsweise
   Pyrethroide, z.B. Acrinathrin, Allethrin (d-cis-trans, d-trans), Bifenthrin, Bioallethrin, Bioallethrin-S-cyclopentenyl, Bioresmethrin, Cycloprothrin, Cyfluthrin (beta-), Cyhalothrin (gamma-, lambda-), Cypermethrin (alpha-, beta-, theta-, zeta-), Cyphenothrin [(1*R*)-*trans*-Isomere], Deltamethrin, Dimefluthrin, Empenthrin [(E*Z*)-(1*R*)-Isomere], Esfenvalerate, Etofenprox, Fenpropathrin, Fenvalerate, Flucythrinate, Flumethrin, Fluvalinate (tau-), Halfenprox, Imiprothrin, Metofluthrin, Permethrin, Phenothrin [(1*R*)-trans-Isomer], Prallethrin, Profluthrin, Pyrethrine (pyrethrum), Resmethrin, RU 15525, Silafluofen, Tefluthrin, Tetramethrin [(1*R*)- Isomere], Tralomethrin, Transfluthrin und ZXI 8901; oder
   DDT; oder Methoxychlor.
(4) Nikotinerge Acetylcholin-Rezeptor-Agonisten, wie beispielsweise
   Neonikotinoide, z.B. Acetamiprid, Clothianidin, Dinotefuran, Imidacloprid, Nitenpyram, Thiacloprid, Thiamethoxam; oder
   Nikotin.
(5) Allosterische Acetylcholin-Rezeptor-Modulatoren (Agonisten), wie beispielsweise
   Spinosyne, z.B. Spinetoram und Spinosad.
(6) Chlorid-Kanal-Aktivatoren, wie beispielsweise
   Avermectine/Milbemycine, z.B. Abamectin, Emamectin-benzoate, Lepimectin und Milbemectin.
(7) Juvenilhormon-Analoge, z.B. Hydroprene, Kinoprene, Methoprene; oder Fenoxycarb; Pyriproxyfen.
(8) Wirkstoffe mit unbekannten oder nicht spezifischen Wirkmechanismen, wie beispielsweise Begasungsmittel, z.B. Methylbromid und andere Alkylhalogenide; oder
   Chloropicrin; Sulfurylfluorid; Borax; Brechweinstein.
(9) Selektive Fraßhemmer, z.B. Pymetrozine; oder Flonicamid.
(10) Milbenwachstumsinhibitoren, z.B. Clofentezine, Diflovidazin, Hexythiazox, Etoxazole.
(11) Mikrobielle Disruptoren der Insektendarmmembran, wie beispielsweise *Bacillus thuringiensis* Subspezies *israelensis*, *Bacillus sphaericus*, *Bacillus thuringiensis* Subspezies *aizawai, Bacillus thuringiensis* Subspezies *kurstaki*, *Bacillus thuringiensis* Subspezies *tenebrionis*, und BT-Pflanzen-Proteine, z.B. Cry1Ab, Cry1Ac, Cry1Fa Cry2Ab, mCry3A, Cry3Ab, Cry3Bb, Cry34/35Ab1.
(12) Inhibitoren der oxidativen Phosphorylierung, ATP-Disruptoren, wie beispielsweise Diafenthiuron; oder
   Organozinnverbindungen, z.B. Azocyclotin, Cyhexatin, Fenbutatin oxide; oder
   Propargite; Tetradifon.
(13) Entkoppler der oxidativen Phoshorylierung durch Unterbrechung des H-Protongradienten, wie beispielsweise Chlorfenapyr und DNOC.
(14) Nikotinerge Acetylcholin-Rezeptor-Antagonisten, wie beispielsweise Bensultap, Cartap (-Hydrochlorid), Thiocylam, und Thiosultap (-sodium).
(15) Inhibitoren der Chitinbiosynthese, Typ 0, wie beispielsweise Benzoylharnstoffe, z.B. Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.
(16) Inhibitoren der Chitinbiosynthese, Typ 1, wie beispielsweise Buprofezin.
(17) Häutungsstörende Wirkstoffe, wie beispielsweise Cyromazine.
(18) Ecdysonagonisten/-disruptoren, wie beispielsweise
   Diacylhydrazine, z.B. Chromafenozide, Halofenozide, Methoxyfenozide und Tebufenozide.
(19) Oktopaminerge Agonisten, wie beispielsweise Amitraz.
(20) Komplex-III-Elektronentransportinhibitoren, wie beispielsweise Hydramethylnon; Acequinocyl; Fluacrypyrim.
(21) Komplex-I-Elektronentransportinhibitoren, beispielsweise aus der Gruppe der METI-Akarizide, z.B. Fenazaquin, Fenpyroximate, Pyrimidifen, Pyridaben, Tebufenpyrad, Tolfenpyrad; oder
   Rotenone (Derris).
(22) Spannungsabhängige Natriumkanal-Blocker, z.B. Indoxacarb; Metaflumizone.
(23) Inhibitoren der Acetyl-CoA-Carboxylase, wie beispielsweise Tetronsäure-Derivate, z.B. Spirodiclofen und Spiromesifen; oder Tetramsäure-Derivate, z.B. Spirotetramat.
(24) Komplex-IV-Elektronentransportinhibitoren, wie beispielsweise Phosphine, z.B. Aluminiumphosphid, Kalziumphosphid, Phosphin, Zinkphosphid; oder Cyanid.
(25) Komplex-II-Elektronentransportinhibitoren, wie beispielsweise Cyenopyrafen.
(28) Ryanodinrezeptor-Effektoren, wie beispielsweise Diamide, z.B. Flubendiamide, Chlorantraniliprole (Rynaxypyr), Cyantraniliprole (Cyazypyr) sowie 3-Brom-N-{2-brom-4-chlor-6-[(1-cyclopropylethyl)carbamoyl]phenyl}-1-(3-chlorpyridin-2-yl)-1H-pyrazol-5-carboxamid (bekannt aus WO2005/077934) oder Methyl-2-[3,5-dibrom-2-({[3-brom-1-(3-chlorpyridin-2-yl)-1H-pyrazol-5-yl]carbonyl}amino)benzoyl]-1,2-dimethylhydrazincarboxylat (bekannt aus WO2007/043677).

Weitere Wirkstoffe mit unbekanntem Wirkmechanismus, wie beispielsweise Azadirachtin, Amidoflumet, Benzoximate, Bifenazate, Chinomethionat, Cryolite, Cyflumetofen, Dicofol, Fluensulfone (5-chloro-2-[(3,4,4-trifluorobut-3-en-1-yl)sulfonyl]-1,3-thiazole), Flufenerim, Pyridalyl und Pyrifluquinazon; desweiteren Präparate auf Basis von Bacillus firmus (1-1582, BioNeem, Votivo) sowie folgende bekannte wirksame Verbindungen

4-{[(6-Brompyrid-3-yl)methyl](2-fluorethyl)amino}furan-2(5H)-on (bekannt aus WO 2007/115644), 4-{[(6-Fluorpyrid-3-yl)methyl](2,2-difluorethyl)amino}furan-2(5H)-on (bekannt aus WO 2007/115644), 4-{[(2-Chlor-1,3-thiazol-5-yl)methyl](2-fluorethyl)amino}furan-2(5H)-on (bekannt aus WO 2007/115644), 4-{[(6-Chlorpyrid-3-yl)methyl](2-fluorethyl)amino}furan-2(5H)-on (bekannt aus WO 2007/ 115644), 4-{[(6-Chlorpyrid-3-yl)methyl](2,2-difluorethyl)amino}furan-2(5H)-on (bekannt aus WO 2007/115644), 4-{[(6-Chlor-5-fluorpyrid-3-yl)methyl](methyl)amino}furan-2(5H)-on (bekannt aus WO 2007/115643), 4-{[(5,6-Dichlorpyrid-3-yl)methyl](2-fluorethyl)amino}furan-2(5H)-on (bekannt aus WO 2007/115646), 4-{[(6-Chlor-5-fluorpyrid-3-yl)methyl](cyclopropyl)amino}furan-2(5H)-on (bekannt aus WO 2007/115643), 4-{[(6-Chlorpyrid-3-yl)methyl](cyclopropyl)amino}furan-2(5H)-on (bekannt aus EP-A-0 539 588), 4-{[(6-Chlorpyrid-3-yl)methyl](methyl)amino}furan-2(5H)-on (bekannt aus EP-A-0 539 588), [(6-Chlorpyridin-3-yl)methyl](methyl)oxido-λ⁴-sulfanylidencyanamid (bekannt aus WO 2007/149134), [1-(6-Chlorpyridin-3-yl)ethyl](methyl)oxido-λ⁴-sulfanylidencyanamid (bekannt aus WO 2007/149134) und seine Diastereomere (A) und (B) 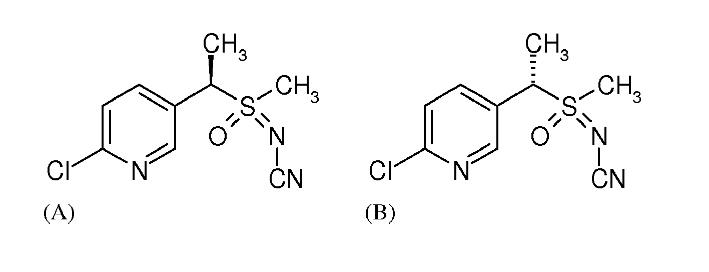 (ebenfalls bekannt aus WO 2007/149134), [(6-Trifluormethylpyridin-3-yl)methyl](methyl)oxido-λ⁴-sulfanylidencyanamid (bekannt aus WO 2007/095229), Sulfoxaflor
(ebenfalls bekannt aus WO 2007/149134), 11-(4-Chlor-2,6-dimethylphenyl)-12-hydroxy-1,4-dioxa-9-azadispiro[4.2.4.2]tetradec-11-en-10-on (bekannt aus WO 2006/089633), 3-(4'-Fluor-2,4-dimethylbiphenyl-3-yl)-4-hydroxy-8-oxa-1-azaspiro[4.5]dec-3-en-2-on (bekannt aus WO 2008/067911),
1-[2-fluoro-4-methyl-5-[(2,2,2-trifluoroethyl)sulfinyl]phenyl]-3-(trifluoromethyl)-1H-1,2,4-Triazol-5-amine (bekannt aus WO 2006/043635),
[(3S,4aR,12R,12aS,12bS)-3-[(Cyclopropylcarbonyl)oxy]-6,12-dihydroxy-4,12b-dimethyl-11-oxo-9-(pyridin-3-yl)-1,3,4,4a,5,6,6a,12,12a,12b-decahydro-2H,11H-benzo[f]pyrano[4,3-b]chromen-4-yl]methylcyclopropancarboxylat (bekannt aus WO 2006/129714),
2-Cyan-3-(difluormethoxy)-N,N-dimethylbenzolsulfonamid (bekannt aus WO2006/056433),
2-Cyan-3-(difluormethoxy)-N-methylbenzolsulfonamid (bekannt aus WO2006/100288), 2-Cyan-3-(difluormethoxy)-N-ethylbenzolsulfonamid (bekannt aus WO2005/035486), 4-(Difluormethoxy)-N-ethyl-N-methyl-1,2-benzothiazol-3-amin-1,1-dioxid (bekannt aus WO2007/057407) und
N-[1-(2,3-Dimethylphenyl)-2-(3,5-dimethylphenyl)ethyl]-4,5-dihydro-1,3-thiazol-2-amin (bekannt aus WO2008/104503).

Bevorzugt sind erfindungsgemäß verwendete Zusammensetzungen mit mehr als einem insektiziden oder akariziden Wirkstoff, wobei die mindestens zwei verschiedenen insektiziden oder akariziden Wirkstoffe bevorzugt ausgewählt sind aus der Gruppe bestehend aus:
Imidacloprid, Thiacloprid, 4-{[6-Chlorpyrid-3-yl)methyl](2,2-difluoroethyl)amino} furan-2(5H)-on Flubendiamide, Chloranthraniliprole, Cyantraniliprole, Spirotetramat, Spirodiclofen, Spiromesifen, Sulfoxaflor, Spinetoram, Abamectin, Ethiprole, Fipronil, Flonicamid, Pymetrozine, Indoxacarb, Metaflumizone, Pyriproxifen, Buprofezin, Methoxyfenozide, Azadirachtin.

Als gegebenenfalls eingesetzte Additive c) in den erfindungsgemäßen Zusammensetzungen kommen insbesondere Zusatzstoffe aus den Gruppen der Frostschutzmittel, der schaumhemmenden Mittel, der Konservierungsmittel, der Antioxidantien, der Spreitmittel, der Farbstoffe und/oder der Verdicker in Betracht.

Als schaumhemmende Stoffe kommen alle üblicherweise für diesen Zweck in agrochemischen Mitteln einsetzbaren Substanzen in Betracht. Bevorzugt sind Silikonöle und Magnesiumstearat.

Als Antioxidantien kommen alle üblicherweise für diesen Zweck in agrochemischen Mitteln einsetzbaren Substanzen in Betracht. Bevorzugt ist Butylhydroxytoluol (2,6-di-t-butyl-4-methylphenol, BHT).

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als Konservierungsmittel kommen alle üblicherweise für diesen Zweck in agrochemischen Mitteln dieses Typs einsetzbaren Substanzen in Frage. Als Beispiele genannt seien Preventol® (Lanxess AG) und Proxel® (Arch Chemival, Inc.).

Als Spreitmittel kommen alle üblicherweise für diesen Zweck in agro-chemischen Mitteln einsetzbaren Substanzen in Betracht. Bevorzugt sind Polyether- oder organo- modifizierte Polysiloxane.

Als Frostschutzmittel kommen alle üblicherweise in agrochemischen Mitteln einsetzbaren Substanzen dieses Typs in Frage. Bevorzugt sind Harnstoff, Glyzerin oder Propylenglykol.

Als Verdicker kommen alle üblicherweise in agrochemischen Mitteln einsetzbaren Substanzen dieses Typs in Frage. Bevorzugt sind Silicate (wie z.B. Attagel® 50 der Firma Engelhard) oder Xanthan gum (wie z.B. Kelzan® S der Firma Kelko).

Der Anteil an Wirkstoff in den erfindungsgemäß verwendeten Zusammensetzungen kann in einem weiten Bereich variiert werden. Im Fall von konzentrierten Formulierungen, z.B. wässrigen Suspensionskonzentraten, liegt er im Allgemeinen zwischen 0,01 und 40 Gew.-%, bevorzugt zwischen 0,1 und 20 Gew.-%, bevorzugt zwischen 1 und 20 Gew.-% und besonders bevorzugt zwischen 1 und 10 Gew.-%.

Die erfindungsgemäß eingesetzten Wirkungsverstärker ausgewählt aus der Gruppe der Mono- und Disaccharide, insbesondere Glucose, Fructose, Galactose und Lactose, sind kommerziell erhältlich.

Die Herstellung der erfindungsgemäß verwendeten Zusammensetzungen erfolgt in der Weise, dass man die Komponenten in den jeweils gewünschten Verhältnissen miteinander vermischt. Die Reihenfolge, in der die Bestandteile miteinander vermengt werden, ist beliebig, allerdings wird der Verdicker üblicherweise zuletzt zuzugeben. Zweckmäßigerweise setzt man die festen Komponenten in feingemahlenem Zustand ein. Es ist aber auch möglich, die nach dem Vermengen der Bestandteile entstehende Suspension zunächst einer Grob- und dann einer Feinmahlung zu unterziehen, so dass die mittlere Teilchengröße z.B. unterhalb von 5 µm liegt.

Die Temperaturen können bei der Durchführung des Verfahrens in einem bestimmten Bereich variiert werden. Geeignete Temperaturen liegen zwischen 10°C und 60°C, vorzugsweise zwischen 15°C und 40°C. Zur Durchführung des Verfahrens kommen übliche Misch- und Mahlgeräte in Betracht, die zur Herstellung von agrochemischen Formulierungen eingesetzt werden.

Es ist auch möglich, Wirkstoffpartikel oder wirkstoffhaltige Partikel und/oder Granulate zu benutzen, die z.B. über Sprühtrocknung, Sprüherstarrung oder Wirbelschichtverfahren (wie beispielweise in EP 1 324 661 beschrieben) gewonnen wurden. Diese sind üblicherweise grobkörnig, d.h. beispielsweise mit einer mittleren Teilchengröße d50 größer als 5 µm (bestimmt nach Dispergierung in der Wasserphase durch Laserbeugung)

Die erfindungsgemäß verwendeten Formulierungen können mit gutem Erfolg zur Abtötung von tierischen Schädlingen, insbesondere Spinnentieren und Insekten, verwendet werden.

Dazu gehören Schädlinge aus dem Stamm:
Arthropoda, insbesondere aus der Klasse der Arachnida z.B. Acarus spp., Aceria sheldoni, Aculops spp., Aculus spp., Amblyomma spp., Amphitetranychus viennensis, Argas spp., Boophilus spp., Brevipalpus spp., Bryobia praetiosa, Centruroides spp., Chorioptes spp., Dermanyssus gallinae, Dermatophagoides pteronyssius, Dermatophagoides farinae, Dermacentor spp., Eotetranychus spp., Epitrimerus pyri, Eutetranychus spp., Eriophyes spp., Halotydeus destructor, Hemitarsonemus spp., Hyalomma spp., Ixodes spp., Latrodectus spp., Loxosceles spp., Metatetranychus spp., Nuphersa spp., Oligonychus spp., Ornithodorus spp., Ornithonyssus spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vaejovis spp., Vasates lycopersici.

Aus der Ordnung der Anoplura (Phthiraptera) z.B. Damalinia spp., Haematopinus spp., Linognathus spp., Pediculus spp., Ptirus pubis, Trichodectes spp..

Aus der Ordnung der Chilopoda z.B. Geophilus spp., Scutigera spp..

Aus der Ordnung der Coleoptera z.B. Acalymma vittatum, Acanthoscelides obtectus, Adoretus spp., Agelastica alni, Agriotes spp., Alphitobius diaperinus, Amphimallon solstitialis, Anobium punctatum, Anoplophora spp., Anthonomus spp., Anthrenus spp., Apion spp., Apogonia spp., Atomaria spp., Attagenus spp., Bruchidius obtectus, Bruchus spp., Cassida spp., Cerotoma trifurcata, Ceutorrhynchus spp., Chaetocnema spp., Cleonus mendicus, Conoderus spp., Cosmopolites spp., Costelytra zealandica, Ctenicera spp., Curculio spp., Cryptorhynchus lapathi, Cylindrocopturus spp., Dermestes spp., Diabrotica spp., Dichocrocis spp., Diloboderus spp., Epilachna spp., Epitrix spp., Faustinus spp., Gibbium psylloides, Hellula undalis, Heteronychus arator, Heteronyx spp., Hylamorpha elegans, Hylotrupes bajulus, Hypera postica, Hypothenemus spp., Lachnosterna consanguinea, Lema spp., Leptinotarsa decemlineata, Leucoptera spp., Lissorhoptrus oryzophilus, Lixus spp., Luperodes spp., Lyctus spp., Megascelis spp., Melanotus spp., Meligethes aeneus, Melolontha spp., Migdolus spp., Monochamus spp., Naupactus xanthographus, Niptus hololeucus, Oryctes rhinoceros, Oryzaephilus surinamensis, Oryzaphagus oryzae, Otiorrhynchus spp., Oxycetonia jucunda, Phaedon cochleariae, Phyllophaga spp., Phyllotreta spp., Popillia japonica, Premnotrypes spp., Prostephanus truncatus, Psylliodes spp., Ptinus spp., Rhizobius ventralis, Rhizopertha dominica, Sitophilus spp., Sphenophorus spp., Stegobium paniceum, Sternechus spp., Symphyletes spp., Tanymecus spp., Tenebrio molitor, Tribolium spp., Trogoderma spp., Tychius spp., Xylotrechus spp., Zabrus spp..

Aus der Ordnung der Collembola z.B. Onychiurus armatus.

Aus der Ordnung der Diplopoda z.B. Blaniulus guttulatus.

Aus der Ordnung der Diptera z.B. Aedes spp., Agromyza spp., Anastrepha spp., Anopheles spp., Asphondylia spp., Bactrocera spp., Bibio hortulanus, Calliphora erythrocephala, Ceratitis capitata, Chironomus spp., Chrysomyia spp., Chrysops spp., Cochliomyia spp., Contarinia spp., Cordylobia anthropophaga, Culex spp., Culicoides spp., Culiseta spp., Cuterebra spp., Dacus oleae, Dasyneura spp., Delia spp., Dermatobia hominis, Drosophila spp., Echinocnemus spp., Fannia spp., Gasterophilus spp., Glossina spp., Haematopota spp., Hydrellia spp., Hylemyia spp., Hyppobosca spp., Hypoderma spp., Liriomyza spp.. Lucilia spp., Lutzomia spp., Mansonia spp., Musca spp., Nezara spp., Oestrus spp., Oscinella frit, Pegomyia spp., Phlebotomus spp., Phorbia spp., Phormia spp., Prodiplosis spp., Psila rosae, Rhagoletis spp., Sarcophaga spp., Simulium spp, Stomoxys spp., Tabanus spp., Tannia spp., Tetanops spp., Tipula spp..

Aus der Ordnung der Heteroptera z.B. Anasa tristis, Antestiopsis spp., Boisea spp., Blissus spp., Calocoris spp., Campylomma livida, Cavelerius spp., Cimex spp., Collaria spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Monalonion atratum, Nezara spp., Oebalus spp., Pentomidae, Piesma quadrata, Piezodorus spp., Psallus spp., Pseudacysta persea, Rhodnius spp., Sahlbergella singularis, Scaptocoris castanea, Scotinophora spp., Stephanitis nashi, Tibraca spp., Triatoma spp.

Aus der Ordnung der Homoptera z.B. Acyrthosipon spp., Acrogonia spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Drosicha spp., Dysaphis spp., Dysmicoccus spp., Empoasca spp., Eriosoma spp., Erythroneura spp., Euscelis bilobatus, Ferrisia spp., Geococcus coffeae, Hieroglyphus spp., Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva spp., Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes spp., Trioza spp., Typhlocyba spp., Unaspis spp., Viteus vitifolü, Zygina spp..

Aus der Ordnung der Hymenoptera z.B. Acromyrmex spp., Athalia spp., Atta spp., Diprion spp., Hoplocampa spp., Lasius spp., Monomorium pharaonis, Solenopsis invicta, Tapinoma spp., Vespa spp..

Aus der Ordnung der Isopoda z.B. Armadillidium vulgare, Oniscus asellus, Porcellio scaber.

Aus der Ordnung der Isoptera z.B. Coptotermes spp., Cornitermes cumulans, Cryptotermes spp., Incisitermes spp., Microtermes obesi, Odontotermes spp., Reticulitermes spp.,

Aus der Ordnung der Lepidoptera z.B. Acronicta major, Adoxophyes spp., Aedia leucomelas, Agrotis spp., Alabama spp., Amyelois transitella, Anarsia spp., Anticarsia spp., Argyroploce spp., Barathra brassicae, Borbo cinnara, Bucculatrix thurberiella, Bupalus piniarius, Busseola spp., Cacoecia spp., Caloptilia theivora, Capua reticulana, Carpocapsa pomonella, Carposina niponensis, Cheimatobia brumata, Chilo spp., Choristoneura spp., Clysia ambiguella, Cnaphalocerus spp., Cnephasia spp., Conopomorpha spp., Conotrachelus spp., Copitarsia spp., Cydia spp., Dalaca noctuides, Diaphania spp., Diatraea saccharalis, Earias spp., Ecdytolopha aurantium, Elasmopalpus lignosellus, Eldana saccharina, Ephestia spp., Epinotia spp., Epiphyas postvittana, Etiella spp., Eulia spp., Eupoecilia ambiguella, Euproctis spp., Euxoa spp., Feltia spp., Galleria mellonella, Gracillaria spp., Grapholitha spp., Hedylepta spp., Helicoverpa spp., Heliothis spp., Hofmannophila pseudospretella, Homoeosoma spp., Homona spp., Hyponomeuta padella, Kakivoria flavofasciata, Laphygma spp., Laspeyresia molesta, Leucinodes orbonalis, Leucoptera spp., Lithocolletis spp., Lithophane antennata, Lobesia spp., Loxagrotis albicosta, Lymantria spp., Lyonetia spp., Malacosoma neustria, Maruca testulalis, Mamestra brassicae, Mocis spp., Mythimna separata, Nymphula spp., Oiketicus spp., Oria spp., Orthaga spp., Ostrinia spp., Oulema oryzae, Panolis flammea, Parnara spp., Pectinophora spp., Perileucoptera spp., Phthorimaea spp., Phyllocnistis citrella, Phyllonorycter spp., Pieris spp., Platynota stultana, Plodia interpunctella, Plusia spp., Plutella xylostella, Prays spp., Prodenia spp., Protoparce spp., Pseudaletia spp., Pseudoplusia includens, Pyrausta nubilalis, Rachiplusia nu, Schoenobius spp., Scirpophaga spp., Scotia segetum, Sesamia spp., Sparganothis spp., Spodoptera spp., Stathmopoda spp., Stomopteryx subsecivella, Synanthedon spp., Tecia solanivora, Thermesia gemmatalis, Tinea pellionella, Tineola bisselliella, Tortrix spp., Trichophaga tapetzella, Trichoplusia spp., Tuta absoluta, Virachola spp..

Aus der Ordnung der Orthoptera z.B. Acheta domesticus, Blatta orientalis, Blattella germanica, Dichroplus spp., Gryllotalpa spp., Leucophaea maderae, Locusta spp., Melanoplus spp., Periplaneta spp., Pulex irritans, Schistocerca gregaria, Supella longipalpa.

Aus der Ordnung der Siphonaptera z.B. Ceratophyllus spp., Ctenocephalides spp., Tunga penetrans, Xenopsylla cheopis.

Aus der Ordnung der Symphyla z.B. Scutigerella spp..

Aus der Ordnung der Thysanoptera z.B. Anaphothrips obscurus, Baliothrips biformis, Drepanothris reuteri, Enneothrips flavens, Frankliniella spp., Heliothrips spp., Hercinothrips femoralis, Rhipiphorothrips cruentatus, Scirtothrips spp., Taeniothrips cardamoni, Thrips spp..

Aus der Ordnung der Zygentoma (= Thysanura), for example, Lepisma saccharina, Thermobia domestica.

z.B. Lepisma saccharina, Thermobia domestica.

Schädlinge aus dem Stamm: Mollusca, insbesondere aus der Klasse der Bivalvia, z.B. Dreissena spp.

Aus der Klasse der Gastropoda z.B. Arion spp., Biomphalaria spp., Bulinus spp., Deroceras spp., Galba spp., Lymnaea spp., Oncomelania spp., Pomacea spp., Succinea spp..

Tierparasiten aus den Stämmen: Plathelminthes und Nematoda, insbesondere aus der Klasse der Helminthen z.B. Ancylostoma duodenale, Ancylostoma ceylanicum, Acylostoma braziliensis, Ancylostoma spp., Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Pflanzenschädlinge aus dem Stamm: Nematoda, d.h. pflanzenparasitäre Nematoden, insbesondere Aphelenchoides spp., Bursaphelenchus spp., Ditylenchus spp., Globodera spp., Heterodera spp., Longidorus spp., Meloidogyne spp., Pratylenchus spp., Radopholus similis, Trichodorus spp., Tylenchulus semipenetrans, Xiphinema spp..

Subphylum: Protozoa

Weiterhin lassen sich Protozoen, wie Eimeria, bekämpfen.

Die vorliegende Erfindung betrifft weiterhin Formulierungen und daraus bereitete Anwendungsformen als Pflanzenschutzmittel und/oder Schädlingsbekämpfungsmittel wie z. B. Drench-, Drip- und Spritzbrühen, umfassend mindestens einen der erfindungsgemäßen Wirkstoffe. Gegebenenfalls enthalten die Anwendungsformen weitere Pflanzenschutzmittel und/oder Schädlingsbekämpfungsmittel und/oder die Wirkung verbessernde Adjuvantien wie Penetrationsförderer, z. B. vegetative Öle wie beispielsweise Rapsöl, Sonnenblumenöl, Mineralöle wie beispielsweise Paraffinöle, Alkylester vegetativer Fettsäuren wie beispielsweise Rapsöl- oder Sojaölmethylester oder Alkanol-alkoxylate und/oder Spreitmittel wie beispielsweise Alkylsiloxane und/oder Salze z.B. organische oder anorganische Ammonium- oder Phosphoniumsalze wie beispielsweise Ammoniumsulfat oder Diammonium-hydrogenphosphat und /oder die Retention fördernde Mittel wie z. B. Dioctylsulfosuccinat oder Hydroxypropyl-guar Polymere und/oder Humectants wie z.B. Glycerin und / oder Dünger wie beispielsweise Ammonium-, Kalium- oder Phosphor-enthaltende Dünger.

Übliche Formulierungen sind beispielsweise wasserlösliche Flüssigkeiten (SL), Emulsionskonzentrate (EC), Emulsionen in Wasser (EW), Suspensionskonzentrate (SC, SE, FS, OD), in Wasser dispergierbare Granulate (WG), Granulate (GR) und Kapselkonzentrate (CS); diese und weitere mögliche Formuliertypen sind beispielsweise durch Crop Life International und in Pesticide Specifications, Manual on development and use of FAO and WHO specifications for pesticides, FAO Plant Production and Protection Papers - 173, prepared by the FAO/WHO Joint Meeting on Pesticide Specifications, 2004, ISBN: 9251048576 beschrieben. Gegebenenfalls enthalten die Formulierungen neben einem oder mehreren erfindungsgemäßen Wirkstoffen weitere agrochemische Wirkstoffe.

Vorzugsweise handelt es sich um Formulierungen oder Anwendungsformen, welche Hilfsstoffe, wie beispielsweise Streckmittel, Lösemittel, Spontanitätsförderer, Trägerstoffe, Emulgiermittel, Dispergiermittel, Frostschutzmittel, Biozide, Verdicker und/oder weitere Hilfsstoffe, wie beispielsweise Adjuvantien enthalten. Ein Adjuvant in diesem Kontext ist eine Komponente, die die biologische Wirkung der Formulierung verbessert, ohne dass die Komponente selbst eine biologische Wirkung hat. Beispiele für Adjuvantien sind Mittel, die die Retention, das Spreitverhalten, das Anhaften an der Blattoberfläche oder die Penetration fördern.

Diese Formulierungen werden in bekannter Weise hergestellt, z.B. durch Vermischen der Wirkstoffe mit Hilfsstoffen wie beispielsweise Streckmitteln, Lösemitteln und/oder festen Trägerstoffen und/oder weiteren Hilfsstoffen wie beispielsweise oberflächenaktive Stoffe. Die Herstellung der Formulierungen erfolgt entweder in geeigneten Anlagen oder auch vor oder während der Anwendung.

Als Hilfsstoffe können solche Stoffe Verwendung finden, die geeignet sind, der Formulierung des Wirkstoffs oder den aus diesen Formulierungen bereiteten Anwendungsformen (wie z.B. gebrauchsfähigen Pflanzenschutzmitteln wie Spritzbrühen oder Saatgutbeizen) besondere Eigenschaften, wie bestimmte physikalische, technische und/oder biologische Eigenschaften, zu verleihen.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (Poly-)Ether, der einfachen und substituierten Amine, Amide, Lactame (wie N-Alkylpyrrolidone) und Lactone, der Sulfone und Sulfoxide (wie Dimethylsulfoxid).

Im Falle der Benutzung von Wasser als Streckmittel können z.B. auch organische Lösemittel als Hilfslösemittel verwendet werden. Als flüssige Lösemittel kommen im Wesentlichen infrage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösemittel wie Dimethylformamid und Dimethylsulfoxid, sowie Wasser.

Grundsätzlich können alle geeigneten Lösemittel verwendet werden. Geeignete Lösemittel sind beispielsweise aromatische Kohlenwasserstoffe, wie z.B. Xylol, Toluol oder Alkylnaphthaline, chlorierte aromatische oder aliphatische Kohlenwasserstoffe, wie z.B. Chlorbenzol, Chlorethylen, oder Methylenchlorid, aliphatische Kohlenwasserstoffe, wie z.B. Cyclohexan, Paraffine, Erdölfraktionen, mineralische und pflanzliche Öle, Alkohole, wie z.B. Methanol, Ethanol, isoPropanol, Butanol oder Glykol sowie deren Ether und Ester, Ketone wie z.B. Aceton, Methylethylketon, Methylisobutylketon oder Cyclohexanon, stark polare Lösemittel, wie Dimethylsulfoxid, sowie Wasser.

Grundsätzlich können alle geeigneten Trägerstoffe eingesetzt werden. Als Trägerstoffe kommen insbesondere infrage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und natürliche oder synthetische Silikate, Harze, Wachse und /oder feste Düngemittel. Mischungen solcher Trägerstoffe können ebenfalls verwendet werden. Als Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Papier, Kokosnussschalen, Maiskolben und Tabakstängel.

Auch verflüssigte gasförmige Streckmittel oder Lösemittel können eingesetzt werden. Insbesondere eignen sich solche Streckmittel oder Trägerstoffe, welche bei normaler Temperatur und unter Normaldruck gasförmig sind, z.B. Aerosol-Treibgase, wie Halogenkohlenwasserstoffe, sowie Butan, Propan, Stickstoff und Kohlendioxid.

Beispiele für Emulgier- und/oder Schaum erzeugende Mittel, Dispergiermittel oder Benetzungsmittel mit ionischen oder nicht-ionischen Eigenschaften oder Mischungen dieser oberflächenaktiven Stoffe sind Salze von Polyacrylsäure, Salze von Lignosulphonsäure, Salze von Phenolsulphonsäure oder Naphthalinsulphonsäure, Polykondensate von Ethylenoxid mit Fettalkoholen oder mit Fettsäuren oder mit Fettaminen, mit substituierten Phenolen (vorzugsweise Alkylphenole oder Arylphenole), Salze von Sulphobernsteinsäureestern, Taurinderivate (vorzugsweise Alkyltaurate), Phosphorsäureester von polyethoxylierten Alkoholen oder Phenole, Fettsäureester von Polyolen, und Derivate der Verbindungen enthaltend Sulphate, Sulphonate und Phosphate, z.B. Alkylarylpolyglycolether, Alkylsulfonate, Alkylsulfate, Arylsulfonate, Eiweißhydrolysate, Lignin-Sulfitablaugen und Methylcellulose. Die Anwesenheit einer oberflächenaktiven Substanz ist vorteilhaft, wenn einer der Wirkstoff und/oder einer der inerten Trägerstoffe nicht in Wasser löslich ist und wenn die Anwendung in Wasser erfolgt.

Als weitere Hilfsstoffe können in den Formulierungen und den daraus abgeleiteten Anwendungsformen Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Nähr- und Spurennährstoffe, wie Salze von Eisen, Mangan, Bor, Kupfer, Kobalt, Molybdän und Zink vorhanden sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel. Weiterhin enthalten sein können schaumerzeugende Mittel oder Entschäumer.

Ferner können die Formulierungen und daraus abgeleiteten Anwendungsformen als zusätzliche Hilfsstoffe auch Haftmittel wie Carboxymethylcellulose, natürliche und synthetische pulverige, körnige oder latexförmige Polymere enthalten, wie Gummiarabikum, Polyvinylalkohol, Polyvinylacetat, sowie natürliche Phospholipide, wie Kephaline und Lecithine, und synthetische Phospholipide. Weitere Hilfsstoffe können mineralische und vegetabile Öle sein.

Gegebenenfalls können noch weitere Hilfsstoffe in den Formulierungen und den daraus abgeleiteten Anwendungsformen enthalten sein. Solche Zusatzstoffe sind beispielsweise Duftstoffe, schützende Kolloide, Bindemittel, Klebstoffe, Verdicker, thixotrope Stoffe, Penetrationsförderer, Retentionsförderer, Stabilisatoren, Sequestiermittel, Komplexbildner, Humectans, Spreitmittel. Im Allgemeinen können die Wirkstoffe mit jedem festen oder flüssigen Zusatzstoff, welches für Formulierungszwecke gewöhnlich verwendet wird, kombiniert werden.

Als Retentionsförderer kommen alle diejenigen Substanzen in Betracht, die die dynamische Oberflächenspannung verringern wie beispielsweise Dioctylsulfosuccinat oder die die Visko-Elastizität erhöhen wie beispielsweise Hydroxypropyl-guar Polymere.

Als Penetrationsförderer kommen im vorliegenden Zusammenhang alle diejenigen Substanzen in Betracht, die üblicherweise eingesetzt werden, um das Eindringen agrochemischer Wirkstoffen in Pflanzen zu verbessern. Penetrationsförderer werden in diesem Zusammenhang dadurch definiert, dass sie aus der (in der Regel wässerigen) Applikationsbrühe und/oder aus dem Spritzbelag in die Kutikula der Pflanze eindringen und dadurch die Stoffbeweglichkeit (Mobilität) der Wirkstoffe in der Kutikula erhöhen können. Die in der Literatur (Baur et al., 1997, Pesticide Science 51, 131-152) beschriebene Methode kann zur Bestimmung dieser Eigenschaft eingesetzt werden. Beispielhaft werden genannt Alkoholalkoxylate wie beispielsweise Kokosfettethoxylat (10) oder Isotridecylethoxylat (12), Fettsäureester wie beispielsweise Rapsöl- oder Sojaölmethylester, Fettamine Alkoxylate wie beispielsweise Tallowamine ethoxylat (15) oder Ammonium und / oder Phosphonium-Salze wie beispielsweise Ammoniumsulfat oder Diammonium-hydrogenphosphat.

Liegen die erfindungsgemäß verwendeten Zusammensetzungen in nicht gebrauchsfertiger Form vor (z.B. als wässriges Suspensionskonzentrat) werden sie für ihren bestimmungsgemäßen Gebrauch zunächst in Wasser verdünnt. Es wird dabei so weit verdünnt, dass der Wirkstoffgehalt bei der beabsichtigen Auftragsmenge eine ausreichende insektizide oder akarizide Wirkung sichert. Die Verdünnung ergibt dabei Zusammensetzungen, die den oben spezifizierten anwendungsfertigen Zusammensetzungen entsprechen.

Die Anwendung dieser Spritzflüssigkeiten erfolgt in der Regel durch Versprühen oder Vernebeln. Die Aufwandmenge zur erfindungsgemäßen Verwendung der Applikationslösungen kann innerhalb eines größeren Bereiches variiert werden. Sie richtet sich nach den jeweiligen agrochemischen Wirkstoffen und nach deren Gehalt in den Formulierungen.

Mit Hilfe der erfindungsgemäß verwendeten Formulierungen wie wasserdispergierbaren Granulate (WG), Suspensionskonzentrate (SC, FS), Öldispersionskonzentrate (OD) und löslicher Flüssigkeiten (SL) lassen sich agrochemische Wirkstoffe in besonders vorteilhafter Weise auf Pflanzen und/oder deren Lebensraum ausbringen. Die enthaltenen agrochemischen Wirkstoffe entfalten dabei eine bessere biologische Wirksamkeit (insbesondere eine bessere insektizide oder akarizide Verfügbarkeit und damit verbunden eine verbesserte Langzeitwirkung bei gleichzeitig guter Kulturpflanzenverträglichkeit) als bei Applikation in Form der entsprechenden herkömmlichen Formulierungen gemäß dem Stand der Technik.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen Teile und Organe der Pflanzen, wie Spross, Blatt und Blüte verstanden werden, wobei beispielhaft Blätter, Nadeln, Stängel, Stämme, Blüten, Fruchtkörper, Früchte und Samen aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Suspensionskonzentraten erfolgt direkt oder durch Einwirkung auf deren Umgebung, Lebensraum oder Lagerraum nach den üblichen Behandlungsmethoden, z.B. durch Tauchen, Sprühen, Spritzen, Verdampfen, Vernebeln, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps, Rüben, Zuckerrohr sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus *Bacillus thuringiensis* (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im Folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft mit den erfindungsgemäß verwendeten Zusammensetzungen (Suspensionskonzentraten) behandelt werden. Die bei den Suspensionskonzentraten oben angegebenen Vorzugsbereiche gelten auch für die Behandlung dieser Pflanzen. Besonders hervorgehoben sei die Pflanzenbehandlung mit den im vorliegenden Text speziell aufgeführten Zusammensetzungen (Suspensionskonzentraten).

Die verdünnte Sprühlösung kann auf jede übliche Art versprüht werden, z.B. durch Spritzen, Gießen, Sprühen, Injizieren oder Streichen.

Der Wirkstoff wird dabei im Allgemeinen in einer Flächen-Konzentration von 1 bis 1000 g/ha ausgebracht, bevorzugt in einer Konzentration von 1 bis 500 g/ha, besonders bevorzugt in einer Konzentration von 5 bis 250 g/ha und ganz besonders bevorzugt in einer Konzentration von 10 bis 250 g/ha.

Bevorzugt werden die erfindungsgemäß verwendeten Zusammensetzungen in solcher Verdünnung und Aufwandmenge auf Pflanzen appliziert, dass ein Flächenauftrag des Wirkungsverstärker (bezogen auf Feststoff) von 1,0 g/ha bis 2000 g/ha, bevorzugt von 5,0 g/ha bis 500 g/ha , besonders bevorzugt von 5 g/ha bis 200 g/ha und ganz besonders bevorzugt von 10 g/ha bis 200 g/ha vorliegt.

Die Mono- und / oder Disaccharide können in den erfindungsgemäßen Zusammensetzungen und in den erfindungsgemäßen Verwendungen in einem breiten Konzentrationsbereich von in der Summe 0,001 - 95 Gew.-% eingesetzt werden. Die Konzentration der Mono- und / oder Disaccharide in der Summe in den aus den Zusammensetzungen bereiteten Anwendungslösungen beträgt dabei üblicherweise 0,001 - 5 Gew.-%, bevorzugt 0,005 - 1 Gew.-%, ganz bevorzugt 0,01 - 0,5 Gew.-%.

Die erfindungsgemäß eingesetzten Mono- und / oder Disaccharide werden in der Zusammensetzung in einer solchen Konzentration zugegeben, dass sie im anwendungsfertigen Pflanzenschutzmittel (in der Spritzbrühe oder bei Tankmix Anwendung) in einer Konzentration von 0,5 bis 80 mmol/l bevorzugt 0,75 bis 37,5 mmol/l, besonders bevorzugt 1,5 bis 25 mmol/l vorliegen.

Im Fall eines formulierten Produktes wird die Konzentration der Mono- und / oder Disaccharide in der Formulierung so gewählt, dass sie nach Verdünnung der Formulierung auf die gewünschte Wirkstoffkonzentration in vorgenannten Bereichen liegt. Die Konzentration der Mono- und / oder Disaccharide in der Summe in der Formulierung beträgt dabei üblicherweise 0,1 - 50 Gew.-%.

Das genaue Wirkspektrum der erfindungsgemäß verwendeten Zubereitungen hängt natürlich von den eingesetzten Wirkstoffen ab.

### Herstellunssbeispiele

### Beispiel 1:

### Herstellung der SC und FS Formulierungen (Ethiprole SC 200, Flubendiamid SC 480, Spirodiclofen SC 240, Thiacloprid SC 480, Cyazypyr FS 480)

Die Suspensionskonzentrate SC bzw. FS werden analog zu den Verfahren hergestellt, wie sie in einschlägigen Vorschriften beschrieben werden. Dabei wird wie folgt vorgegangen:
1) Ein größerer Teil des Wassers wird in einem Rührbehälter vorgelegt. Während des Rührens werden die Formulierhilfsmittel (z.B. Tristyrolpolyglykolether als Emulgator, Glycerin als Frostschutzmittel, eine Polydimethylsiloxanemuklsion als Entschäumer) hinzugegeben. Von der Verdicker-Vorlösung (z.B. eine Xantan-Lösung) wird nur eine Teilmenge hinzugefügt. Schließlich wird der Wirkstoff Ethiprole. bzw. Flubendiamid bzw. Spirodiclofen bzw. Cyazypyr eingegeben.
2) Die obige, homogenisierte Mischung wird in einer Kolloidmühle vorgemahlen.
3) Die vorgemahlene Mischung wird in einen zweiten Rührbehälter transferiert, von wo sie mittels einer Pumpe zu einer Perlmühle gefördert wird. Hiermit wird die Feinmahlung solange durchgeführt, bis die gewünschte Partikelgröße erreicht ist.
4) Die Verdicker Vorlösung wird separat dadurch hergestellt, dass man das Verdicker-Pulver unter Scherung in Wasser einrührt, in das zuvor ein Konservierungsmittel zugefügt wurde.
5) Das restliche Wasser wie auch die restliche Verdicker-Vorlösung werden zu der unter 3) frisch hergestellten feingemahlenen Suspension hinzugegeben und zwar soviel, dass die angestrebte Endviskosität des SC/FS erreicht wird.
6) Anschließend wird das fertige Produkt in einem geeigneten Packmittel abgefüllt.

### Beispiel 2:

### Herstellung der OD Formulierung (Spirotetramat OD 150)

Die Öldispersion OD wird analog zu den Verfahren hergestellt, wie sie in einschlägigen Vorschriften beschrieben wird. Dabei wird wie folgt vorgegangen:
1) Ein größerer Teil des organischen Lösemittels wird in einem Rührbehälter vorgelegt. Während des Rührens werden die Formulierhilfsmittel und der Wirkstoff Spirotetramat hinzugegeben.
2) Die obige, homogenisierte Mischung wird in einer Kolloidmühle vorgemahlen.
3) Die vorgemahlene Mischung wird in einen zweiten Rührbehälter transferiert, von wo sie mittels einer Pumpe zu einer Perlmühle gefördert wird. Hiermit wird die Feinmahlung solange durchgeführt, bis die gewünschte Partikelgröße erreicht ist.
4) Anschließend wird das fertige Produkt in einem geeigneten Packmittel abgefüllt.

### Beispiel 3:

### Herstellung der WG Formulierungen (Fipronil WG 30, Fipronil WG 80, Deltamethrin WG 25, Flubendiamid WG 24

Bei der Fipronil WG 30 ist der erfindungsgemäße Wirkungsvertärker Lactose in die WG-Rezeptur eingebaut. Man spricht hier in Bezug auf den Wirkungsverstärker von einer Fertigformulierung. Bei allen anderen Formulierungen und biologischen Beispielen wurde der erfindungsgemäße Wirkungsverstärker separat (gekennzeichnet durch +) in der angegebenen Konzentration zur Spritzbrühe des Pflanzenschutzmittels hinzugegeben.

Das wasserdispergierbare Granulat WG wird analog zu den Verfahren hergestellt, wie sie in einschlägigen Vorschriften beschrieben wird. Dabei wird wie folgt vorgegangen:
1) In einem Rührbehälter wird Wasser vorgelegt und alle Formulierhilfsmittel (z.B. Ligninsulfonat als Dispergiermittel, Alkylsulfonatnaphthalin als Netzmittel, Zitronensäure zur chemischen Stabilisierung des Wirkstoffs, Kaolin als Füllstoff und Träger) und der Wirkstoff hinzugefügt. Im Falle der Fipronil WG 30 (biologisches Beispiel 1, Tabellen 1-3) wird die Lactose (27% bzw. 10%) an dieser Stelle hinzugegeben. Insgesamt sollte die entstandene wässrige Slurry einen Gesamtgehalt-Feststoffgehalt von etwa 50% haben. Mit Hilfe einer Kolloidmühle oder einer Perlmühle wird nun solange eine Nassmahlung durchgeführt, bis die gewünschte Endfeinheit der Partikel erreicht ist.
2) Die wässrige Suspension wird in einem geeigneten Granuliergerät wie einem Sprühtrockner, einem fluidisiertem Sprühtrockner oder einem Wirbelschichtgranulator getrocknet und granuliert.
3) Durch eine Siebung werden die zu kleinen und zu großen Partikel aus dem Granulat entfernt, so dass das WG die angestrebte Granulatpartikelgrößenverteilung aufweist.
4) Anschließend wird das WG in ein geeignetes Packmittel abgefüllt.

### Beispiel 4:

### Herstellung der Formulierung SL 200 der Verbindung B

Die SL 200-Formulierung (Soluble Liquid) wird analog zu den Verfahren hergestellt, wie sie in den einschlägigen Vorschriften beschrieben wird. Dabei wird wie folgt vorgegangen:
1) Alle Formulierungsbestandteile wie das Lösemittel, der Emulgator und gegebenenfalls andere Zusatzstoffe werden zusammen mit der Verbindung B in einen Rührbehälter gegeben. Es wird solange gemischt bis eine homogene Flüssigkeit erhalten wird.
2) Die SL-Formulierung wird durch ein Filter gegeben, um ungelöste Bestandteile zu entfernen und um eine klare Flüssigkeit zu erhalten.
3) Anschließend wird das Produkt in ein geeignetes Packmittel abgefüllt.

In den nachfolgenden biologischen Beispielen werden die so hergestellten Formulierungen eingesetzt. Bei den erfindungsgemäßen Zusammensetzungen, die zusätzlich noch ein Mono- oder Disaccharid enthalten, bedeuten die %-Angaben Gew.-%. So enthält beispielsweise "Flubendiamid SC 480 + 0,5 % Fructose" 0.5 Gew.-% an Fructose, bezogen auf das Gesamtgewicht der Applikationslösung.

### Biologische Beispiele

### Fertigformulierung

### Beispiel 1: Nilaparvata lugens

Zur Herstellung einer zweckmäßigen Applikationslösung vermischt man den gewünschten Anteil formulierter Ware - der bereits das Saccharid enthält - mit Wasser auf die jeweils gewünschte Konzentration.

Reispflanzen (*Oryza sativa)* werden mit der Applikationslösung in der gewünschten Konzentration gespritzt und nach Antrocknen des Belages mit Larven der Braunen Reiszikade (*Nidaparvata lugens*) besetzt.

Nach der gewünschten Zeit wird die Wirkung in % bestimmt. Dabei bedeutet 100 %, dass alle Reiszikaden abgetötet wurden; 0 % bedeutet, dass keine Reiszikaden abgetötet wurden.

Bei diesem Test zeigte die erfindungsgemäße Zusammensetzung überlegene Wirksamkeit gegenüber dem im Handel befindlichen Produkt:

**Tabelle 1: Nilanarvata lugens**

| Wirkstoff | Konzentration. (g ai/ ha) | Tage nach Infektion | % Wirkung Reis |
|---|---|---|---|
| **Fipronil WG 30 2007-007469 (27 % Lactose in der WG-Rezeptur)** Erfindungsgemäß | 12,5 | 5 | 95 |
| **Fipronil WG 80** Stand der Technik | 12,5 | 5 | 55 |

### Beispiel 2: Frankliniella occidentalis

Zur Herstellung einer zweckmäßigen Applikationslösung vermischt man den gewünschten Anteil formulierter Ware - der bereits das Saccharid enthält - mit Wasser auf die jeweils gewünschte Konzentration.

Baumwollpflanzen (*Gossypium hirsutum)* werden mit der Applikationslösung in der gewünschten Konzentration gespritzt und nach Antrocknen des Belages mit Larven des Kalifornischen Blütenthrips (*Frankliniella occidentalis*) besetzt.

Nach der gewünschten Zeit wird die Wirkung in % bestimmt. Dabei bedeutet 100 %, dass die Pflanze durch die Saugaktivität der Thripse nicht geschädigt wurde; 0 % bedeutet, dass die Pflanze vergleichbar zur Kontrolle geschädigt wurde.

Bei diesem Test zeigte z. B. die erfindungsgemäße Zusammensetzung überlegene Wirksamkeit gegenüber der Formulierung ohne Saccharid:

**Tabelle 2: Frankliniella occidentalis**

| Wirkstoff | Konzentration. (g ai/ ha) | Tage nach Infektion | % Wirkung Baumwolle |
|---|---|---|---|
| **Fipronil WG 30 2007-007469 (27 % Lactose in der WG Rezeptur)** Erfindungsgemäß | 12,5 | 2 | 98 |
| **Fipronil WG 30 2007-007147** Stand der Technik | 12,5 | 2 | 63 |

### Beispiel 3: Plutella xylostella

Zur Herstellung einer zweckmäßigen Applikationslösung vermischt man den gewünschten Anteil formulierter Ware - der bereits das Saccharid enthält - mit Wasser auf die jeweils gewünschte Konzentration.

Kohlpflanzen (*Brassica oderacea)* werden mit der Applikationslösung in der gewünschten Konzentration gespritzt und nach dem Antrocknen des Belages mit Larven der Kohlmotte (*Plutella xylostella*) besetzt.

Nach der gewünschten Zeit wird die Wirkung in % bestimmt. Dabei bedeutet 100 %, dass alle Raupen abgetötet wurden; 0 % bedeutet, dass keine Raupen abgetötet wurden.

Bei diesem Test zeigte die erfindungsgemäße Zusammensetzung überlegene Wirksamkeit gegenüber dem im Handel befindlichen Produkt:

**Tabelle 3: Plutella xylostella**

| Wirkstoff | Konzentration. (g ai/ ha) | Tage nach Infektion | % Wirkung Kohl |
|---|---|---|---|
| **Fipronil WG 30 2007-007469 (27 % Lactose in der WG-Rezeptur)** Erfindungsgemäß | 25 | 1 | 80 |
| **Fipronil WG 30 2007-008413 (10 % Lactose in der WG-Rezeptur)** Erfindungsgemäß | 25 | 1 | 70 |
| **Fipronil WG 30 2007-008436 (10 % Lactose in der WG-Rezeptur)** Erfindungsgemäß | 25 | 1 | 60 |
| **Fipronil WG 80** Stand der Technik | 25 | 1 | 20 |

### Tankmischungen

### Steigerung der Initial - Wirkung:

### Beispiel Nr. 1: Heliothis armigera

Zur Herstellung einer zweckmäßigen Applikationslösung vermischt man den gewünschten Anteil formulierter Ware mit Wasser unter Zugabe des Wirkungsverstärkers auf die jeweils gewünschte Konzentration.

Paprikapflanzen (*Capsicum annuum)* werden mit der Applikationslösung in der gewünschten Konzentration gespritzt und nach dem Antrocknen des Belages mit Larven des Baumwollkapselwurms (*Heliothis armigera*) besetzt.

Nach der gewünschten Zeit wird die Wirkung in % bestimmt. Dabei bedeutet 100 %, dass das Blatt nicht gefressen wurde; 0 % bedeutet, dass der Blattfrass vergleichbar mit der unbehandelten Kontrolle war.

Bei diesem Test zeigten z. B. die folgenden erfindungsgemäßen Zusammensetzungen überlegene Wirksamkeit gegenüber dem einzeln ausgebrachten Insektizid, wobei die Saccharide allein keine Wirkung zeigten:

**Tabelle 1: Heliothis armigera**

| Wirkstoff | Konzentration (g ai/ ha) | Tage nach Infektion | % Wirkung Paprika |
|---|---|---|---|
| **Deltamethrin WG 25 + 0,5 % Lactose** Erfindungsgemäß | 15 | 1 | 100 |
| **Deltamethrin WG 25** Stand der Technik | 15 | 1 | 69 |
| **Ethiprole SC 200 + 0,5 % Lactose** Erfindungsgemäß | 25 | 1 | 57 |
| **Ethiprole SC 200** Stand der Technik | 25 | 1 | 19 |

### Beispiel 2: Myzus persicae

Zur Herstellung einer zweckmäßigen Applikationslösung vermischt man den gewünschten Anteil formulierter Ware mit Wasser unter Zugabe des Wirkungsverstärkers auf die jeweils gewünschte Konzentration.

Paprikapflanzen (*Capsicum annuum)*, die stark mit einer gemischten Population der Grünen Pfirsichblattlaus infiziert sind, werden mit der Applikationslösung in der gewünschten Konzentration gespritzt.

Nach der gewünschten Zeit wird die Wirkung in % bestimmt. Dabei bedeutet 100 %, dass alle Blattläuse abgetötet wurden; 0 % bedeutet, dass keine Blattläuse abgetötet wurden.

Bei diesem Test zeigten z. B. die folgenden erfindungsgemäßen Zusammensetzungen überlegene Wirksamkeit gegenüber dem einzeln ausgebrachten Insektizid, wobei die Saccharide allein keine Wirkung zeigten:

**Tabelle 2: Myzus persicae**

| Wirkstoff | Konzentration. (g ai/ ha) | Tage nach Infektion | % Wirkung Paprika |
|---|---|---|---|
| **Spirotetramat OD 150 + 0,5 % Lactose** Erfindungsgemäß | 72 | 3 | 50 |
| **Spirotetramat OD 150** Stand der Technik | 72 | 3 | 20 |

### Beispiel Nr. 3: Phaedon cochleariae Adulte

Zur Herstellung einer zweckmäßigen Applikationslösung vermischt man den gewünschten Anteil formulierter Ware mit Wasser unter Zugabe des Wirkungsverstärkers auf die jeweils gewünschte Konzentration.

Kohlpflanzen (*Brassica oleracea*) werden mit der Applikationslösung in der gewünschten Konzentration gespritzt und nach dem Antrocknen des Belages mit Adulten des Meerrettichblattkäfers *(Phaedon cochleariae*) besetzt.

Nach der gewünschten Zeit wird die Wirkung in % bestimmt. Dabei bedeutet 100 %, dass alle Käfer abgetötet wurden; 0 % bedeutet, dass keine Käfer abgetötet wurden.

Bei diesem Test zeigten z. B. die folgenden erfindungsgemäßen Zusammensetzungen überlegene Wirksamkeit gegenüber dem einzeln ausgebrachten Insektizid, wobei die Saccharide allein keine Wirkung zeigten:

**Tabelle 3: Adulte von Phaedon cochleariae auf Kohl**

| Wirkstoff | Konzentration (g ai/ ha) | Tage nach Infektion | % Wirkung Kohl |
|---|---|---|---|
| **Thiacloprid SC 480 + 0,5 % Fructose** Erfindungsgemäß | 25 | 1 | 87 |
| **Thiacloprid SC 480 + 0,5 % Galactose** Erfindungsgemäß | 25 | 1 | 73 |
| **Thiacloprid SC 480** Stand der Technik | 25 | 1 | 47 |

### Beispiel Nr. 4: Phaedon cochleariae Larvenfrass

Zur Herstellung einer zweckmäßigen Applikationslösung vermischt man den gewünschten Anteil formulierter Ware mit Wasser unter Zugabe des Wirkungsverstärkers auf die jeweils gewünschte Konzentration.

Kohlpflanzen (*Brassica oderacea*) werden mit der Applikationslösung in der gewünschten Konzentration gespritzt und nach dem Antrocknen des Belages mit Larven des Meerrettichblattkäfers (*Phaedon cochleariae*) besetzt.

Nach der gewünschten Zeit wird die Wirkung in % bestimmt. Dabei bedeutet 100 %, dass das Blatt nicht gefressen wurde; 0 % bedeutet, dass der Blattfrass vergleichbar mit der unbehandelten Kontrolle war.

Bei diesem Test zeigten z. B. die folgenden erfindungsgemäßen Zusammensetzungen überlegene Wirksamkeit gegenüber dem einzeln ausgebrachten Insektizid, wobei die Saccharide allein keine Wirkung zeigten:

**Tabelle 4: Larven von Phaedon cochleariae auf Kohl**

| Wirkstoff | Konzentration (g ai/ ha) | Tage nach Infektion | % Wirkung Kohl |
|---|---|---|---|
| **Deltamethrin WG 25 + 0,5 % Fructose** Erfindungsgemäß | 15 | 1 | 56 |
| **Deltamethrin WG 25 + 0,5 % Galactose** Erfindungsgemäß | 15 | 1 | 49 |
| **Deltamethrin WG 25 + 0,5 % Lactose** Erfindungsgemäß | 15 | 1 | 25 |
| **Deltamethrin WG 25** Stand der Technik | 15 | 1 | 0 |

### Beispiel Nr. 5: Plutella xylostella

Zur Herstellung einer zweckmäßigen Applikationslösung vermischt man den gewünschten Anteil formulierter Ware mit Wasser unter Zugabe des Wirkungsverstärkers auf die jeweils gewünschte Konzentration.

Kohlpflanzen (*Brassica oderacea)* werden mit der Applikationslösung in der gewünschten Konzentration gespritzt und nach dem Antrocknen des Belages mit Larven der Kohlmotte (*Plutella xylostella*) besetzt.

Nach der gewünschten Zeit wird die Wirkung in % bestimmt. Dabei bedeutet 100 %, dass das Blatt nicht gefressen wurde; 0 % bedeutet, dass der Blattfrass vergleichbar mit der unbehandelten Kontrolle war.

Bei diesem Test zeigten z. B. die folgenden erfindungsgemäßen Zusammensetzungen überlegene Wirksamkeit gegenüber dem einzeln ausgebrachten Insektizid, wobei die Saccharide allein keine Wirkung zeigten:

**Tabelle 5: Plutella xylostella**

| Wirkstoff | Konzentration (g ai/ ha) | Tage nach Infektion | % Wirkung Kohl |
|---|---|---|---|
| **Deltamethrin WG 25 + 0,5 % Fructose** Erfindungsgemäß | 7,5 | 3 | 38 |
| **Deltamethrin WG 25 + 0,5 % Galactose** Erfindungsgemäß | 7,5 | 3 | 25 |
| **Deltamethrin WG 25 + 0,5 % Lactose** Erfindungsgemäß | 7,5 | 3 | 25 |
| **Deltamethrin WG 25** Stand der Technik | 7,5 | 3 | 0 |
| **Ethiprole SC 200 + 0,5 % Fructose** Erfindungsgemäß | 25 | 2 | 67 |
| **Ethiprole SC 200** Stand der Technik | 25 | 2 | 47 |
| **Fipronil WG 80 + 0,5 % Fructose** Erfindungsgemäß | 25 | 1 | 71 |
| **Fipronil WG 80 + 0,5 % Galactose** Erfindungsgemäß | 25 | 1 | 77 |
| **Fipronil WG 80** Stand der Technik | 25 | 1 | 43 |

### Beispiel Nr. 6

### Steigerung der Initial - Wirkung: Spodoptera frugiperda

Zur Herstellung einer zweckmäßigen Applikationslösung vermischt man den gewünschten Anteil formulierter Ware mit Wasser unter Zugabe des Wirkungsverstärkers auf die jeweils gewünschte Konzentration.

Baumwollpflanzen (*Gossypium hirsutum*), Maispflanzen (*Zea maidis)* oder Kohlpflanzen (*Brassica oleracea)* werden mit der Applikationslösung in der gewünschten Konzentration gespritzt und nach dem Antrocknen des Belages mit dem Heerwurm (*Spodoptera frugiperda*) besetzt.

Nach der gewünschten Zeit wird die Wirkung in % bestimmt. Dabei bedeutet 100 %, dass alle Raupen abgetötet wurden; 0 % bedeutet, dass keine Raupen abgetötet wurden.

Bei diesem Test zeigten z. B. die folgenden erfindungsgemäßen Zusammensetzungen überlegene Wirksamkeit gegenüber dem einzeln ausgebrachten Insektizid, wobei die Saccharide allein keine Wirkung zeigten:

**Tabelle 6: Spodoptera frugiperda**

| Wirkstoff | Konzentration (g ai/ ha) | Tage nach Infektion | % Wirkung Baumwolle | % Wirkung Mais | % Wirkung Kohl |
|---|---|---|---|---|---|
| **Flubendiamid SC 480 + 0,5 % Fructose** Erfindungsgemäß | 9 | 1 | 71 | 64,7 | 62,3 |
| **Flubendiamid SC 480 + 0,5 % Galactose** Erfindungsgemäß | 9 | 1 | 71,3 | 69 | 66,3 |
| **Flubendiamid SC 480 + 0,5 % Glucose** Erfindungsgemäß | 9 | 1 | 71 | 66,7 | 71 |
| **Flubendiamid SC 480 + 0,5 % Lactose** Erfindungsgemäß | 9 | 1 | 70 | 57,7 | 58 |
| **Flubendiamid SC 480 + 0,5 % Trehalose** Erfindungsgemäß | 9 | 1 | 66,7 | 64,7 | 75,7 |
| **Flubendiamid SC 480** Stand der Technik | 9 | 1 | 51 | 44,7 | 51,3 |

### Verbreiterung des Wirkspektrums

### Beispiel Nr. 1: Myzus persicae

Zur Herstellung einer zweckmäßigen Applikationslösung vermischt man den gewünschten Anteil formulierter Ware mit Wasser unter Zugabe des Wirkungsverstärkers auf die jeweils gewünschte Konzentration.

Paprikapflanzen (*Capsicum annuum)*, die stark mit einer gemischten Population der Grünen Pfirsichblattlaus infiziert sind, werden mit der Applikationslösung in der gewünschten Konzentration gespritzt.

Nach der gewünschten Zeit wird die Wirkung in % bestimmt. Dabei bedeutet 100 %, dass alle Blattläuse abgetötet wurden; 0 % bedeutet, dass keine Blattläuse abgetötet wurden.

Bei diesem Test zeigten z. B. die folgenden erfindungsgemäßen Zusammensetzungen überlegene Wirksamkeit gegenüber dem einzeln ausgebrachten Insektizid, wobei die Saccharide allein keine Wirkung zeigten:

**Tabelle 1: Myzus persicae**

| Wirkstoff | Konzentration (g ai/ ha) | Tage nach Infektion | % Wirkung Paprika |
|---|---|---|---|
| **Cyazypyr FS 480 + 0,1 % Fructose** Erfindungsgemäß | 48 | 7 | 30 |
| **Cyazypyr FS 480** Stand der Technik | 48 | 7 | 10 |

### Beispiel Nr. 2: Phaedon cochleariae Adulte

Zur Herstellung einer zweckmäßigen Applikationslösung vermischt man den gewünschten Anteil formulierter Ware mit Wasser unter Zugabe des Wirkungsverstärkers auf die jeweils gewünschte Konzentration.

Kohlpflanzen (*Brassica oderacea*) werden mit der Applikationslösung in der gewünschten Konzentration gespritzt und nach dem Antrocknen des Belages mit Adulten des Meerrettichblattkäfers (*Phaedon cochleariae*) besetzt.

Nach der gewünschten Zeit wird die Wirkung in % bestimmt. Dabei bedeutet 100 %, dass alle Käfer abgetötet wurden; 0 % bedeutet, dass keine Käfer abgetötet wurden.

Bei diesem Test zeigten z. B. die folgenden erfindungsgemäßen Zusammensetzungen überlegene Wirksamkeit gegenüber dem einzeln ausgebrachten Insektizid, wobei die Saccharide allein keine Wirkung zeigten:

**Tabelle 2: Adulte von Phaedon cochleariae auf Kohl**

| Wirkstoff | Konzentration (g ai/ ha) | Tage nach Infektion | % Wirkung Kohl |
|---|---|---|---|
| **Verbindung B SL 200 + 0,5 % Fructose** Erfindungsgemäß | 50 | 1 | 87 |
| **Verbindung B SL 200 + 0,5 % Galactose** Erfindungsgemäß | 50 | 1 | 53 |
| **Verbindung B SL 200 + 0,5 % Glucose** Erfindungsgemäß | 50 | 1 | 47 |
| **Verbindung B SL 200** Stand der Technik | 50 | 1 | 18,5 |

Dabei handelt es sich bei der Verbindung B um 4-{[6-Chlorpyrid-3-yl)methyl](2,2-difluoroethyl)amino} furan-2(5H)-on.

### Beispiel Nr. 3: Phaedon cochleariae Larvenmortalität

Zur Herstellung einer zweckmäßigen Applikationslösung vermischt man den gewünschten Anteil formulierter Ware mit Wasser unter Zugabe des Wirkungsverstärkers auf die jeweils gewünschte Konzentration.

Kohlpflanzen (*Brassica oderacea*) werden mit der Applikationslösung in der gewünschten Konzentration gespritzt und nach dem Antrocknen des Belages mit Larven des Meerrettichblattkäfers (*Phaedon cochleariae*) besetzt.

Nach der gewünschten Zeit wird die Wirkung in % bestimmt. Dabei bedeutet 100 %, dass alle Käferlarven abgetötet wurden; 0 % bedeutet, dass keine Käferlarven abgetötet wurden.

Bei diesem Test zeigten z. B. die folgenden erfindungsgemäßen Zusammensetzungen überlegene Wirksamkeit gegenüber dem einzeln ausgebrachten Insektizid, wobei die Saccharide allein keine Wirkung zeigten:

**Tabelle 3: Larven von Phaedon cochleariae auf Kohl**

| Wirkstoff | Konzentration (g ai/ ha) | Tage nach Infektion | % Wirkung Kohl |
|---|---|---|---|
| **Flubendiamid SC 480 + 2,5 % Lactose** Erfindungsgemäß | 48 | 2 | 55 |
| **Flubendiamid SC 480** Stand der Technik | 48 | 2 | 10 |
| **Flubendiamid WG 24 + 2,5 % Lactose** Erfindungsgemäß | 48 | 2 | 35 |
| **Flubendiamid WG 24** Stand der Technik | 48 | 2 | 0 |
| **Spirotetramat SC 240 + 0,5 % Fructose** Erfindungsgemäß | 72 | 3 | 20 |
| **Spirotetramat SC 240+ 0,1 % Lactose** Erfindungsgemäß | 72 | 3 | 30 |
| **Spirotetramat SC 240** Stand der Technik | 72 | 3 | 7 |

### Beispiel Nr. 4: Phaedon cochleariae Larvenfrass

Zur Herstellung einer zweckmäßigen Applikationslösung vermischt man den gewünschten Anteil formulierter Ware mit Wasser unter Zugabe des Wirkungsverstärkers auf die jeweils gewünschte Konzentration.

Kohlpflanzen (*Brassica oleracea*) werden mit der Applikationslösung in der gewünschten Konzentration gespritzt und nach dem Antrocknen des Belages mit Larven des Meerrettichblattkäfers (*Phaedon cochleariae*) besetzt.

Nach der gewünschten Zeit wird die Wirkung in % bestimmt. Dabei bedeutet 100 %, dass das Blatt nicht gefressen wurde; 0 % bedeutet, dass der Blattfrass vergleichbar mit der unbehandelten Kontrolle war.

Bei diesem Test zeigten z. B. die folgenden erfindungsgemäßen Zusammensetzungen überlegene Wirksamkeit gegenüber dem einzeln ausgebrachten Insektizid, wobei die Saccharide allein keine Wirkung zeigten:

**Tabelle 4: Larven von Phaedon cochleariae auf Kohl**

| Wirkstoff | Konzentration (g ai/ ha) | Tage nach Infektion | % Wirkung Kohl |
|---|---|---|---|
| **Flubendiamid SC 480 + 0,1 % Lactose** Erfindungsgemäß | 24 | 2 | 31 |
| **Flubendiamid SC 480** Stand der Technik | 24 | 2 | 0 |
| **Spirodiclofen SC 240 + 0,5 % Lactose** Erfindungsgemäß | 72 | 2 | 38 |
| **Spirodiclofen SC 240 + 0,1 % Fructose** Erfindungsgemäß | 72 | 2 | 41 |
| **Spirodiclofen SC 240 + 0,1 % Glucose** Erfindungsgemäß | 72 | 2 | 48 |
| **Spirodiclofen SC 240** | 72 | 2 | 9 |
| Stand der Technik | | | |
| **Spiromesifen SC 240 + 0,1 % Gluctose** Erfindungsgemäß | 72 | 3 | 42 |
| **Spiromesifen SC 240** Stand der Technik | 72 | 3 | 21 |

## Patentansprüche

**1.** Zusammensetzung enthaltend
a) einen oder mehrere Wirkstoffe ausgewählt aus der Gruppe bestehend aus Enaminocarbonylverbindungen, Benzenedicarboxamiden, Anthranilsäureamiden, cyclischen Ketoenolen, Sulfoximinen, Pyrethroiden und biologischen Insektiziden und
b) einen oder mehrere Wirkungsverstärker ausgewählt aus der Gruppe bestehend aus Mono- und Disacchariden und
c) gegebenenfalls ein oder mehrere Additive.

**2.** Zusammensetzung gemäß Anspruch 1, bei dem der Wirkstoff ausgewählt ist aus der Gruppe bestehend aus 4-{[6-Chlorpyrid-3-yl)methyl](2,2-difluoroethyl)amino} furan-2(5H)-on, Flubendiamid, Chloranthraniliprole, Cyanthraniliprole, Spirotetramat, Spirodiclofen, Spiromesifen, Sulfoxaflor, Acrinathrin, Alpha-Cypermethrin, Beta-Cyfluthrin, Cyfluthrin, Cypermethrin, Deltamethrin, Bifenthrin, Lambda-Cyhalothrin, Gamma-Cyhalothrin, Taufluvalinate, Transfluthrin, Pyrethrum und Azadirachtin.

**3.** Zusammensetzung gemäß Anspruch 1 oder 2, bei dem der Wirkungsverstärker ausgewählt ist aus der Gruppe der Monosaccharide.

**4.** Zusammensetzung gemäß Anspruch 1 oder 2, bei dem der Wirkungsverstärker Glucose, Fructose, Galactose oder Lactose ist.

**5.** Verfahren zur Herstellung der Zusammensetzung nach einem der Ansprüche 1 bis 4, bei dem man die Komponenten im gewünschten Verhältnis miteinander vermischt.

**6.** Verfahren zur Bekämpfung von unerwünschten Schadinsekten oder Akariden in der Landwirtschaft, bei dem man eine Zusammensetzung gemäß einem der Ansprüche 1 bis 4 auf die Schadinsekten und / oder deren Lebensraum ausbringt, wobei Verfahren zur therapeutischen Behandlung des menschlichen oder tierischen Körpers ausgenommen sind.

**7.** Verfahren nach Anspruch 6, bei dem die Zusammensetzung auf die Pflanzenoberfläche aufgebracht wird.

**8.** Pflanzenschutzmittel enthaltend eine Zusammensetzung nach einem der Ansprüche 1 bis 4.

**8.** Verwendung einer Zusammensetzung nach einem der Ansprüche 1 bis 4 zur Bekämpfung von Schadinsekten oder Akariden in der Landwirtschaft oder im Materialschutz.

**9.** Verwendung einer Zusammensetzung enthaltend
a) einen oder mehrere Wirkstoffe ausgewählt aus der Gruppe bestehend aus Enaminocarbonylverbindungen, Benzenedicarboxamiden, Anthranilsäureamiden, cyclischen Ketoenolen, Sulfoximinen, Fiprolen, Pyrethroiden und Neonikotinoiden, Wachstumsregulatoren, Frasshemmstoffen, Carbamaten sowie biologischen, botanischen und anorganischen Insektiziden und Macroliden, und
b) einen oder mehrere Wirkungsverstärker ausgewählt aus der Gruppe bestehend aus Mono- und Disacchariden und
c) gegebenenfalls ein oder mehrere Additive
zur Verbreiterung des Wirkungsspektrums der Wirkstoffe in der Bekämpfung von Schadinsekten oder Akariden in der Landwirtschaft und im Materialschutz..

**10.** Verwendung einer Zusammensetzung enthaltend
a) einen oder mehrere Wirkstoffe ausgewählt aus der Gruppe bestehend aus Enaminocarbonylverbindungen, Benzenedicarboxamiden, Anthranilsäureamiden, cyclische Ketoenole, Sulfoximinen, Fiprolen, Pyrethroiden und Neonikotinoiden, Wachstumsregulatoren, Frasshemmstoffen, Carbamaten sowie biologischen, botanischen und anorganischen Insektiziden und Macroliden, und
b) einen oder mehrere Wirkungsverstäker ausgewählt aus der Gruppe bestehend aus Mono-und Disacchariden und
c) gegebenenfalls ein oder mehrere Additive
zur Verbesserung der Initialwirkung der Wirkstoffe in der Bekämpfung von Schadinsekten oder Akariden in der Landwirtschaft und im Materialschutz..
